# EUROPEAN PATENT APPLICATION

(11) **EP 4 783 082 A1**
(43) Date of publication of application: **29.07.2026**
(21) Application number: 24878917.4
(22) Date of filing: 12.10.2024
(51) Int. Cl.: G06Q 10/0631, G06Q 10/087

(54) **CARRIER MOVEMENT SERVICE ORCHESTRATION METHOD AND APPARATUS, AND DEVICE**

(30) Priority: 16.10.2023 CN 202311340526
(71) Applicant: Hangzhou Hikrobot Co., Ltd., Hangzhou, Zhejiang 310051 (CN)
(72) Inventor: WU, Huapeng, Hangzhou, Zhejiang 310051 (CN)
(74) Representative: 2SPL Patentanwälte PartG mbB
(86) International application number: PCT/CN2024/124356
(87) International publication number: WO 2025/082273

(57) **Abstract**

The present application provides a carrier movement service orchestration method and system, and a device. The method comprises: providing an active node and an event node, wherein the active node comprises an orchestration object and configuration parameters thereof, the configuration parameters of the orchestration object comprise an input parameter, an output parameter and a function of the orchestration object, and the orchestration object is a resource used in a carrier movement process; and the event node comprises a message object and a configuration parameter thereof, the configuration parameter of the message object comprises a function of the message object, and the message object is a message of triggering continued execution of a process in the carrier movement process; and on the basis of carrier movement service orchestration information inputted by a user, and on the basis of the active node and the event node, orchestrating a service process file, wherein the service process file is used for controlling carrier movement.

## Description

### TECHNICAL FIELD

The present disclosure relates to the field of robot control technologies, and in particular to an orchestration method, system and device for a carrier movement service.

### BACKGROUND

Storage management is conducted for the materials (e.g. commodities) stored in the warehouses so as to carry out storage and custody for the materials through warehouses, whereas the warehouses are buildings and sites for storing the materials, and have the functions of material storage and protection. In order to realize storage management, the mobile robots (e.g. forklifts, automated guided vehicles, case-handling robots and so on) automatically transport the carriers (e.g. material cases, goods racks and pallets and so on) which are used for carrying materials.

Along with the business development, the in-factory mobile robots need to perform more and more complex operation flows and therefore have to adapt to various unknown service scenes. In the related arts, there is no reasonable control method for task orchestration and scheduling of the in-factory mobile robots.

### SUMMARY

Embodiments of the present disclosure provide an orchestration method of a carrier movement service, including:
providing an activity node and an event node are provided; where the activity node includes an orchestration object and its configuration parameters, the configuration parameters of the orchestration object include input parameters and output parameters and functions of the orchestration object, and the orchestration object refers to resources used for a carrier movement process; the event node includes a message object and its configuration parameters, the configuration parameters of the message object include functions of the message object, and the message object is a message for triggering a flow to be continued in the carrier movement process; and
based on carrier movement service orchestration information input by a user, orchestrating a service flow file in combination with the activity node and the event node; where the service flow file is used for controlling carrier movement.

Embodiments of the present disclosure provide an orchestration system for a carrier movement service, including:
an obtaining module, configured to provide an activity node and an event node; where the activity node includes an orchestration object and its configuration parameters, the configuration parameters of the orchestration object include input parameters and output parameters and functions of the orchestration object, and the orchestration object refers to resources used for a carrier movement process; the event node includes a message object and its configuration parameters, the configuration parameters of the message object include functions of the message object, and the message object is a message for triggering a flow to be continued in the carrier movement process; and
a processing module, configured to, based on carrier movement service orchestration information input by a user, orchestrate a service flow file in combination with the activity node and the event node;
where the service flow file is used for controlling carrier movement.

Embodiments of the present disclosure provide an electronic device, including a processor and a machine readable storage medium, where the machine readable storage medium stores machine executable instructions executable by the processor; and the processor is configured to execute the machine executable instructions to perform the method in the embodiments.

In the embodiments of the present disclosure, when the activity node and the event node are provided, a service flow file can be orchestrated in combination with the activity node and event node based on carrier movement service orchestration information input by users. The service flow file is used to control the carrier movement. Therefore, various task scenes of the in-factory robots can be orchestrated, and permutation and combination can be performed on the multiple task scenes to obtain any composite scene, bringing strong service flexibility and saving project development costs. Furthermore, based on orchestrated tasks, a target carrier can be moved from an initial position point to a target position point, so that the tasks of the robot can be performed more reasonably, thereby improving the on-site maintenance efficiency, lowering the operation maintenance costs and enhancing task execution efficiency and user experiences. In this way, the flexibility of the scheduling system can be improved and the development workload of the research and development personnel can be reduced. So, the problems of large customization work of the scheduling system, extensive business involvements and issues introduced by frequent code modifications in research and development can be solved.

### BRIEF DESCRIPTION OF THE DRAWINGS

In order to more clearly describe the technical solutions in the embodiments of the present disclosure or in the prior arts, the drawings required for descriptions of the embodiments of the present disclosure or the prior arts will be briefly introduced below. Apparently, the drawings described below are only some embodiments of the present disclosure. Persons of ordinary skills in the arts can also obtain other drawings based on these drawings of the embodiments of the present disclosure.
FIG. 1 is a schematic flowchart illustrating an orchestration method of a carrier movement service according to an embodiment of the present disclosure.
FIG. 2 is a schematic diagram illustrating a system structure according to an embodiment of the present disclosure.
FIG. 3 is a flowchart illustrating a task execution method of a carrier movement service according to an embodiment of the present disclosure.
FIG. 4 is a schematic diagram illustrating a cross-map movement process according to an embodiment of the present disclosure.
FIG. 5 is a schematic diagram illustrating a cross-map movement process according to an embodiment of the present disclosure.
FIG. 6 is a structural schematic diagram illustrating an orchestration system of a carrier movement service according to an embodiment of the present disclosure.
FIG. 7 is a hardware structure diagram illustrating an electronic device according to an embodiment of the present disclosure.

### DETAILED DESCRIPTION OF THE EMBODIMENTS

The terms used in the present disclosure are for the purpose of describing particular embodiments only and are not intended to limit the present disclosure. Terms determined by "a", "the" and "said" in their singular forms in the present disclosure and the appended claims are also intended to include plurality, unless clearly indicated otherwise in the context. It should also be understood that the term "and/or" as used herein is and includes any and all possible combinations of one or more of the associated listed items.

It is to be understood that, although terms "first", "second", "third" and the like may be used in the present disclosure to describe various information, such information should not be limited to these terms. These terms are used only to distinguish the same type of information from each other. For example, without departing from the scope of the present disclosure, first information may be referred as second information; and similarly, second information may also be referred as first information. Depending on the context, as used herein, the wording "if" may be interpreted as "while ..." or "when ..." or "in response to a determination".

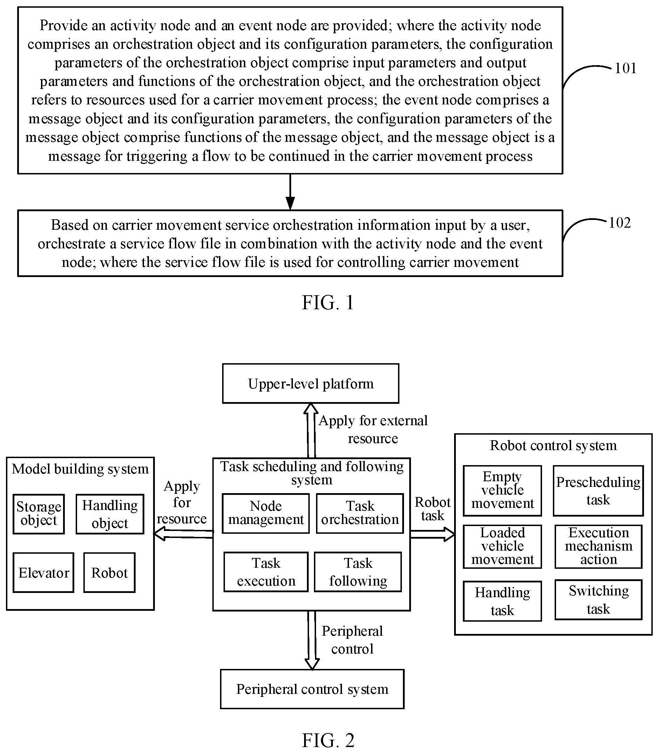

An embodiment of the present disclosure provides an orchestration method of a carrier movement service. The method may be applied to an electronic device, and the electronic device can be a device of any type, such as host computer, management platform, server, personal computer, laptop computer, smart phone and so on. With reference to FIG. 1, the method may include steps 101 to 102.

At step 101, an activity node and an event node are provided. The activity node includes an orchestration object and its configuration parameters. The configuration parameters of the orchestration object include input parameters and output parameters and functions of the orchestration object. The orchestration object refers to resources used for a carrier movement process. The event node includes a message object and its configuration parameters. The configuration parameters of the message object include functions of the message object, and the message object is a message for triggering a flow to be continued in a carrier movement process.

For example, the orchestration object in the activity node may include but not limited to at least one of:
Carrier object: the carrier object represents a carrier to be moved in a carrier movement service, such as a material case, a goods rack, and a pallet and so on. The configuration parameters of the carrier object may include input parameters (e.g. a region where the carrier object is located and an identifier of the carrier object and the like, which are not limited herein as long as the carrier object can be found by the input parameters) of the carrier object, output parameters (e.g. find an carrier object consistent with the input parameters) of the carrier object, and functions (e.g. the carrier object is used for transporting materials and so on) of the carrier object. These configuration parameters are not limited herein.

Storage node object: the storage node object represents a position for placing a carrier in a carrier movement service. The storage node may be a site (refer to a position for placing a carrier on the ground as site), a bin (refer to a position at a height for placing a carrier as bin) and an aisle (refer to a region/passage for placing carriers as aisle; the aisle can include multiple bins and/or multiple sites). The configuration parameters of the storage node object may include input parameters (e.g. querying for the storage node object from the site, querying for the storage node object from the bin, and querying for the storage node object from the aisle, which is not limited herein as long as the storage node object can be found by the input parameters) of the storage node object, output parameters (e.g. finding the storage node object consistent with the input parameters) of the storage node object, and functions (e.g. the storage node object is used for placing a carrier and the like, such as an initial position point, a target position point and so on) of the storage node object. These configuration parameters are not limited herein.

Vehicle type object: this vehicle type object represents a robot type used for placing a carrier in a carrier movement service, such as a forklift, an automated guided vehicle, a case-handling robot and the like. The configuration parameters of the vehicle type object may include input parameters (e.g. a type of the vehicle type object and so on, which is not limited herein as long as the vehicle type object can be found by the input parameters) of the vehicle type object, output parameters (e.g. finding the vehicle type object consistent with the input parameters) of the vehicle type object, and functions (e.g. the vehicle type object corresponds to a certain type of robots and so on.) of the vehicle type object. These configuration parameters are not limited herein.

Route object: this route object represents a movement route of a robot in a carrier movement service. The configuration parameters of the route object may include input parameters (e.g. what algorithm (for example, A* algorithm and so on) is used to calculate a movement route and the like, which is not limited herein as long as the route object can be found by the input parameters) of the route object, output parameters (e.g. finding the route object consistent with the input parameters) of the route object, and functions (e.g. the route object corresponds to a movement route of a robot and the like) of the route object. The configuration parameters are not limited herein.

Robot object: the robot object represents a robot in a carrier movement service. The configuration parameters of the robot object may include input parameters (e.g. what type of tasks is executed by the robot object and the like, such as empty vehicle movement task, loaded vehicle movement task and the like) of the robot object, output parameters (e.g. finding the robot object consistent with the input parameters) of the robot object, and functions of the robot object. The configuration parameters are not limited herein.

Peripheral resource object: the peripheral resource object represents a peripheral resource in a carrier movement service. The configuration parameters of the peripheral resource object may include input parameters (e.g. a type of the peripheral resource object and so on) of the peripheral resource object, output parameters (e.g. finding the peripheral resource object consistent with the input parameters) of the peripheral resource object, and functions (e.g. elevator functions and so on) of the peripheral resource object. The configuration parameters are not limited herein.

Certainly, the above are only several examples of the orchestration object in the activity node and are not limited herein.

Illustratively, the message object in the event node may include but not limited to at least one of:
Resource change message object: the resource change message object is a message for triggering a flow to be continued in a carrier movement process, and the configuration parameters of the resource change message object represents change of resources of the orchestration object.

Task continuation message object: the task continuation message object is a message for triggering a flow to be continued in a carrier movement process, and the configuration parameters of the task continuation message object represents task continuation.

Peripheral notification message object: the peripheral notification message object is a message for triggering a flow to be continued in a carrier movement process. The peripheral notification message object may include a resource request message and a resource in-place message. The configuration parameters of the resource request message represent a peripheral resource is requested (able to trigger a flow to be continued), and the configuration parameters of the resource in-place message represent the peripheral resource is ready (able to trigger a flow to be continued).

Robot execution message object: the robot execution message object is a message for triggering a flow to be continued in a carrier movement process, and the configuration parameters of the robot execution message object represents a message in an execution process.

Certainly, the above area only several examples of the message object in the event node and are not limited herein.

At step 102, based on carrier movement service orchestration information input by a user, a service flow file is orchestrated in combination with the activity node and the event node; where the service flow file is used for controlling carrier movement.

Illustratively, the service flow file may include multiple task nodes executed in sequence, and based on the carrier movement service orchestration information input by the user, the service flow file is orchestrated in combination with the activity node and the event node, which may include but not limited to: for each task node in the service flow file, if the task node is directed to the orchestration object, based on an orchestration object selection instruction (the orchestration object selection instruction is used to indicate one or more orchestration objects in the activity node) input by the user, selecting a target orchestration object corresponding to the orchestration object selection instruction, and displaying configuration parameters of the target orchestration object, and by the user, inputting an input condition of the target orchestration object based on the configuration parameters. On this basis, the task node can be created in the service flow file, and this task node includes the target orchestration object and the input condition input by the user based on the configuration parameters.

Based on the carrier movement service orchestration information input by the user, the service flow file is orchestrated in combination with the activity node and the event node, which may include but not limited to: if the task node is directed to the message object, based on a message object selection instruction (the message object selection instruction is used to indicate one or more objects in the event node) input by the user, selecting a target message object corresponding to the message object selection instruction. On this basis, the task node can be created in the service flow file, and this task node includes the target message object.

In summary, multiple task nodes can be created in the service flow file. These task nodes form the service flow file, that is, the service flow file includes multiple task nodes. For each task node, the task node includes a target orchestration object and an input condition, or the task node includes a target message object.

It can be seen from the above technical solutions that, in the embodiments of the present disclosure, when the activity node and the event node are provided, the service flow file can be orchestrated in combination with the activity node and event node based on the carrier movement service orchestration information input by users. The service flow file is used to control the carrier movement. Therefore, the task scenes of the robots can be orchestrated (for example, various task scenes of the in-factory robots can be orchestrated, and permutation and combination can be performed on the multiple task scenes to obtain any composite scene), bringing strong service flexibility and saving project development costs. Furthermore, based on orchestrated tasks, a target carrier can be moved from an initial position point to a target position point, so that the tasks of the robot can be performed more reasonably, thereby improving the on-site maintenance efficiency, lowering the operation maintenance costs and enhancing task execution efficiency and user experiences. In this way, the flexibility of the scheduling system can be improved and the development workload of the research and development personnel can be reduced. So, the problems of large customization work of the scheduling system, extensive business involvements and issues introduced by frequent code modifications in research and development can be solved.

In combination with specific application scenes, the technical solutions of the embodiments of the present disclosure will be detailed below.

With reference to FIG. 2, it is a schematic diagram of a system structure in the embodiments of the present disclosure. A task scheduling and following system can also be a task scheduling and following device, i.e. an electronic device in the above embodiments, which is used to realize the orchestration method for the carrier movement service. A model building system (also called Central Management System (CMS)) can also be a model building device, and the model building system is the central management system. A peripheral control system (for example, Warehouse Control System (WCS)) can also be a peripheral control device. A robot control system (RCS) can also be robot control device. An upper-level platform is a platform used to manage the task scheduling and following device, and can be a workstation or the like for distributing a task to the task scheduling and following device.

**First,** for the node management function of the task scheduling and following device

Illustratively, the task scheduling and following device can support the node management function. Based on the node management function, the task scheduling and following device can design an activity node, namely, provide an activity node. The activity node may include but not limited to an orchestration object and its configuration parameters. The configuration parameters of the orchestration object may include input parameters, output parameters and functions of the orchestration object, and the orchestration object can be resources used in a carrier movement process.

For example, based on interactions with the model building device, the activity nodes such as applying for a carrier, applying for a storage node, querying for a vehicle type, querying for a route and querying for an elevator and so on can be designed. Based on interactions with the upper-level platform, the activity nodes such as applying for external resources can be designed. Based on interactions with the peripheral control device, the activity nodes such as peripheral control and so on can be designed. Based on interactions with robot control device, the activity nodes such as empty vehicle movement, loaded vehicle movement, handling task, prescheduling task, execution mechanism action and map switching and so on can be designed.

For example, the model building device is used to maintain storage object information, and the storage object is a storage node which is a position for placing a carrier. The storage node can be a site (refer to a position for placing a carrier on the ground as site), a bin (refer to a position at a height for placing a carrier as bin) and an aisle (refer to a region/passage for placing carriers as aisle; the aisle can include multiple bins and/or multiple sites). By interacting with the model building device, the task scheduling and following device can apply for a storage node from the model building device, so as to design the activity node "applying for storage node". For the activity node, the orchestration object of the activity node is a storage node object which represents a position for placing a carrier in a carrier movement service. The configuration parameters of the storage node object may include the input parameters of the storage node object, the output parameters of the storage node object, and the functions of the storage node object.

For example, the model building device is used to maintain information of a handling object, and the handling object can be a carrier such as a material case, a goods rack and a pallet and so on. By interacting with the model building device, the task scheduling and following device can apply for a carrier from the model building device so as to design the activity node "applying for carrier". For the activity node, the orchestration object of the activity node is a carrier object which represents a carrier to be moved in a carrier movement service, such as a material case, a goods rack and a pallet. The configuration parameters of the carrier object may include the input parameters of the carrier object, the output parameters of the carrier object and the functions of the carrier object.

**For** example, the model building device is used to maintain robot information. By interacting with the model building device, the task scheduling and following device can query for a type of each robot, for example, a type of a forklift, an automated guide vehicle and a case-handling robot and so on from the model building device, so as to design the activity node "querying for vehicle type". For the activity node, the orchestration object of the activity node is a vehicle type object which represents a robot type for placing a carrier in a carrier movement service, such as a forklift, an automated guided vehicle, a case-handling robot and so on. The configuration parameters of the vehicle type object may include the input parameters, output parameters and functions of the vehicle type object.

For example, the model building device is used to maintain all route information, and by interacting with the model building device, the task scheduling and following device can query for an available route (e.g. a shortest travel route and so on) from the model building device, so as to design the activity node "querying for route". For the activity node, the orchestration object of the activity node is a route object which represents a movement route of the robot in a carrier movement service. The configuration parameters of the route object may include the input parameters, output parameters and functions of the route object.

**For** example, the model building device is used to maintain elevator information, and by interacting with the model building device, the task scheduling and following device can query for an elevator from the model building device, so as to design this activity node "querying for elevator". The contents of the activity node "querying for elevator" are no longer detailed redundantly.

For example, the upper-level platform is used to maintain external resources, such as warehouse storage location resource and so on. In this embodiment, the type of the external resources is not limited. By interacting with the upper-level platform, the task scheduling and following device can apply for an external resource from the upper-level platform so as to design the activity node "applying for external resource".

For example, the peripheral control device is used to maintain a peripheral resource, such as an elevator resource and so on. In this embodiment, the type of the peripheral resource is not limited herein. By interacting with the peripheral control device, the task scheduling and following device can apply for a peripheral resource from the peripheral control device so as to design the activity node "peripheral control". For the activity node, the orchestration object of the activity node is a peripheral resource object, which represents a peripheral resource in a carrier movement service. The configuration parameters of the peripheral resource object may include the input parameters of the peripheral resource object, and the output parameters of the peripheral resource object and the functions of the peripheral resource object.

For example, the robot control device can control the robot to execute an empty vehicle movement (i.e. moving without a carrier), a loaded vehicle movement (i.e. moving with a carrier), a handling task (i.e. moving in two directions of coming and going and so on), a prescheduling task (i.e. moving to a position earlier), and execution mechanism action and map switching (for example, moving from one floor to another) and other operations. Therefore, by interacting with the robot control device, the task scheduling and following device can design the activity nodes such as "empty vehicle movement, loaded vehicle movement, handling task, prescheduling task, execution mechanism action and map switching" and so on. These activity nodes are referred to as robot activity node. For the activity node, the orchestration object of the activity node is a robot object which represents a robot in a carrier movement service. The configuration parameters of the robot object may include the input parameters of the robot object, the output parameters of the robot object and the functions of the robot object.

In one possible implementation, the orchestration object in the activity node includes a carrier object, and the configuration parameters of the carrier object may include but not limited to at least one of: querying for a carrier based on input condition; supporting querying for a carrier from bin, site and aisle; supporting querying for a temporary carrier; supporting querying for an unbound carrier (the carrier information of the unbound carrier is not associated or bound with the account of the user); after finding a carrier, adding an outbound lock identifier to the carrier; when cyclically querying for a carrier, triggering by timer or region state update; if a target position point is already input, querying for a carrier based on the carrier type of the target position point; if a target position point is already input, querying for a carrier based on a distance between the target position point and the carrier; if carrier multitasking is supported, ignoring carrier lock state (even if there is a carrier in a locked state (an outbound lock identifier is added to the carrier), application can be made for this carrier); if empty carrier query is not selected, allowing querying for empty carrier and loaded carrier; if an unidentified carrier (the unidentified carrier refers to a carrier without barcode or RFID label, which is used for temporary storage or short-distance transportation) is supported, allowing querying for a temporary carrier; whether carrier stacking is supported.

In one possible implementation, the orchestration object in the activity node includes a storage node object and the configuration parameters of the storage node object may include but not limited to at least one of: querying for a storage object based on input condition; supporting querying for a storage object from bin, site and aisle; if a storage object is in an inner storage location, returning to a storage object of an outer storage location; after a storage object is found, adding an inbound lock identifier to the storage object; when cyclically querying for a storage object, triggering by timer or region state update; whether there is a queue in a storage object; if yes, ignoring the storage object lock state (i.e., ignoring the inbound lock identifier, namely, even if there is a storage object with an inbound lock identifier, application can be made for the storage object).

In one possible implementation, the orchestration object in the activity node includes a vehicle type object, and the configuration parameters of the vehicle type object may include at least one of: querying for an intersection of various vehicle types; if the vehicle types are not configured, defaulting all vehicle types to be available; if the vehicle types are configured, taking an intersection of the configured vehicle types; if the intersection is empty, reporting exception; if the vehicle types are inconsistent with vehicle numbers, reporting exception.

In one possible implementation, the orchestration object in the activity node includes a route object, and the configuration parameters of the route object may include at least one of: cross-map use, including combination of handover points of elevator and map; obtaining all routes leading to the target position point (e.g. using A* algorithm or another algorithm); updating a number of entry and exit tasks for an elevator in a route; filtering a disabled elevator or an elevator in abnormal state; before querying for a route again for elevator anomaly, firstly releasing a route; if one route spans multiple maps, performing cross-map node execution multiple times; when a cross-elevator task is completed, updating a number of entry and exit tasks for an elevator.

In one possible implementation, the orchestration object in the activity node includes a robot object, and the configuration parameters of the robot object may include at least one of: executing an empty vehicle movement task; executing a loaded vehicle movement task; executing a handling task; executing a prescheduling task; executing an execution mechanism action task; executing a map switching task. Certainly, the above are only several examples of the robot task and are not limited herein.

In one possible implementation, the orchestration object in the activity node includes a peripheral resource object, and the configuration parameters of the peripheral resource object may include at least one of: based on input condition, continuing a packet and sending the packet to a peripheral control device; waiting for a feedback message from the peripheral control device; when the peripheral resource is disabled, directly returning without invoking an interface of the peripheral control device; when the peripheral resource is disabled, cyclically applying for the peripheral resource.

Illustratively, the task scheduling and following device can support the node management function. Based on the node management function, the task scheduling and following device can design an event node, namely, provide an event node. The event node may include but not limited to a message object and its configuration parameters. The configuration parameters may include functions of the message object, and the message object is a message for triggering a flow to be continued in a carrier movement process.

For example, based on interactions with the model building device, the event nodes such as resource change and so on can be designed. Based on interactions with the upper-level platform, the event nodes such as task continuation and so on can be designed. Based on interactions with the peripheral control device, the event nodes such as peripheral notification and so on can be designed. Based on interactions with the robot control device, the event nodes such as message reporting and so on can be designed in a robot execution process. These event nodes are not limited herein.

For example, the task scheduling and following device can interact a resource change message with the model building device. For example, when a certain storage node is occupied, the model building device sends a resource change message that the storage node is occupied to the task scheduling and following device; when a certain storage node is released, the model building device sends a resource change message that the storage node is released to the task scheduling and following device. The resource change cases may include, for example, resource change of storage node, resource change of carrier, resource change of elevator, and resource change of robot and so on, and will not be limited herein. Based on interactions with the model building device, the event nodes such as resource change and so on can be designed. For the event nodes, the message object can be a resource change message object, and the resource change message object is a message for triggering a flow to be continued in a carrier movement process. The configuration parameters represent resource change of the orchestration object.

For example, the task scheduling and following device can interact a task continuation message with the upper-level platform. For example, tasks 1 and 2 are executed for a carrier. After the task 1 is completed, the upper-level platform sends a task continuation message to the task scheduling and following device so that the task 2 can be continued for the carrier. Based on interactions with the upper-level platform, the event nodes such as task continuation and so on can be designed. For the event nodes, the message object is a task continuation message object, and the task continuation message object is a message for triggering a flow to be continued in a carrier movement process. The configuration parameters represent task continuation.

**For** example, the task scheduling and following device can interact a peripheral notification message with the peripheral control device. For example, the task scheduling and following device can send a resource request message (indicating requesting a peripheral resource, such as requesting an elevator resource) to the peripheral control device, and the peripheral control device sends a resource in-place message (indicating the peripheral resource is ready and available) to the task scheduling and following device. The peripheral notification message is not limited herein. Based on interactions with the peripheral control device, the event nodes such as peripheral notification and so on can be designed. For the event nodes, the message object in the event nodes can be a peripheral notification message object, and the peripheral notification message object is a message for triggering a flow to be continued in a carrier movement process. The peripheral notification message object may include a resource request message and a resource in-place message. The configuration parameters of the resource request message represent a peripheral resource is requested, and the configuration parameters of the resource in-place message represent a peripheral resource is ready.

**For** example, the task scheduling and following device can interact a message (i.e. a message in a robot execution process) with the robot control device. If the robot fails, the robot control device sends a failure message to the task scheduling and following device. When the robot completes a task, the robot control device sends a task completion message to the task scheduling and following device. The messages in the robot execution process are not limited herein. Based on interactions with the robot control device, the event nodes such as message reporting in the robot execution process can be designed. For the event nodes, the message object is a robot execution message object, and the robot execution message object is a message for triggering a flow to be continued in a carrier movement process. The configuration parameters represent a message in an execution process.

Secondly, for the task orchestration function of the task scheduling and following device

Illustratively, the task scheduling and following device can support the task orchestration function. Based on the task orchestration function, the task scheduling and following device can orchestrate a scheduling task of a robot (e.g. a logistics robot or the like). For example, based on the designing of the activity node and the event node, combined with the standard nodes (such as start node, ending node, logic judgment node, timer node, message event node, and script node and the like) of a service flow engine, the scheduling task of the robot in various operation scenes can be orchestrated and then performed. When the scheduling task is performed (refer to subsequent process), a carrier can be moved from one position point (hereinafter refer to this position point as an initial position point) to another position point (hereinafter refer to this position point as a target position point).

For example, based on the carrier movement service orchestration information input by a user, combined with the activity node and the event node, the service flow file can be orchestrated, and the service flow file may include multiple task nodes executed in sequence. For each task node in the service flow file, if the task node is directed to the orchestration object, based on an orchestration object selection instruction input by the user, a target orchestration object corresponding to the orchestration object selection instruction is selected, and configuration parameters of the target orchestration object are displayed; the user inputs an input condition of the target orchestration object based on the configuration parameters. The task node can be created in the service flow file, and the task node may include the target orchestration object and the input condition input by the user based on the configuration parameters. If the task node is directed to the message object, based on a message object selection instruction input by the user, a target message object corresponding to the message object selection instruction is selected. The task node can be created in the service flow file, and the task node may include the target message object. In summary, multiple task nodes can be created in the service flow file, and these task nodes form the service flow file, namely, the service flow file includes multiple task nodes.

How to orchestrate a service flow file is not limited in this embodiment, as long as the users can select the activity node and the event node in combination with the activity node and the event node and perform permutation and combination on the order of the activity node and the event node to obtain the service flow file. The orchestration method is not limited herein.

Illustratively, after the service flow file is orchestrated based on the carrier movement service orchestration information input by the user and in combination with the activity node and the event node, the service flow file can be stored in a specified storage medium. Thus, in a task execution process, the service flow file in the specified storage medium can be scheduled and by executing the service flow file, the carrier movement can be controlled, thereby realizing the scheduling tasks in various operation scenes.

Illustratively, the operation scene may include but not limited to aisle scene, dense storage scene, elevator scene, stacking scene, and peripheral automation scene, high-bay rack and double-deep scene, multi-vehicle type handover scene, progressive exchange scene, and buffer progressive scene and so on, which is not limited herein. Certainly, the operation scene may be an arrangement and combination of the above scenes, namely, any composite scene is formed as operation scene by combination. For example, the operation scene is a combination of the aisle scene and the stacking scene, and the operation scene is a combination of the dense storage scene and the elevator scene and so on.

In conclusion, the service flow file stored in the specified storage medium may include but not limited to at least one of: a service flow file for the aisle scene, where the aisle scene represents that a carrier passes through an aisle in a movement process; a service flow file for the dense storage scene, where the dense storage scene represents that a storage node has an inner storage location and an outer storage location, and the storage node is a position for placing a carrier; a service flow file for the elevator scene, where the elevator scene represents that a carrier passes through an elevator in a movement process; a service flow file for the stacking scene, where the stacking scene represents that a robot carries multiple carriers, or a storage node (e.g. site, aisle and bin and the like) carries multiple carriers; a service flow file for the peripheral automation scene, where the peripheral automation scene represents that a robot needs to dock with a peripheral; a service flow file for the high-bay rack and double-deep scene, where the high-bay rack and double-deep scene represents that a robot is a double-deep robot and a carrier is a high-bay rack; a service flow file for the multi-vehicle type handover scene, where the multi-vehicle type handover scene represents robots of at least two vehicle types are needed to transport carriers; a service flow file for the progressive exchange scene, where the progressive exchange scene represents that there are a primary workstation and a backup workstation so that, after the carrier of the primary workstation is moved away, the carrier of the backup workstation is moved to the primary workstation; a service flow file for the buffer progressive scene, where the buffer progressive scene represents that, when a target position corresponds to multiple buffer points, a carrier progressively moves toward a closest buffer point of the target position. Certainly, the above are only several examples of the service flow file, and not limited herein.

Thirdly, for the task execution function of the task scheduling and following device

Illustratively, the task scheduling and following device can support the task execution function. Based on the task execution function, the task scheduling and following device can perform the orchestrated tasks in a task orchestration process. For example, based on a task distributed by the upper-level platform, or an automatic operation task or a task execution instruction input by a user (this task execution instruction is used to trigger the task), the orchestrated task flow can be initiated, instantiating the task flow and driving the task flow execution. When the resource application node is reached, an application can be sent to the model building device for a desired resource; when the peripheral control node is reached, a request is sent to the peripheral control device for peripheral control; when the robot task node is reached, a robot task is distributed to the robot control device, and the completion of the robot task is awaited. When the task flow is at an event node waiting for message trigger, the task flow can be continued by resource change message, peripheral notification message, and robot execution stage message based on trigger mechanism of the service flow engine until the flow is ended.

When the scheduling task is executed, if the initial position point is a workstation, and the target position point is a warehouse (i.e. a certain position in the warehouse), the carrier is moved from the initial position point to the target position point so that the material can be moved from the workstation to the warehouse by moving the carrier, thereby realizing inbound material delivery. If the initial position point is a warehouse (i.e. a certain position in the warehouse), and the target position point is a workstation, the carrier is moved from the initial position point to the target position point so that the material can be moved from the warehouse to the workstation by moving the carrier, thereby realizing outbound material delivery.

**In** one possible implementation, after the service flow file is stored in the specified storage medium, the service flow file in the specified storage medium can be scheduled during a task execution process. Since the service flow file is used to control the carrier movement, control on the carrier movement can be realized by executing the service flow file. For example, after a user-input task execution instruction including an initial position point, a target position point and a file identifier is received, a service flow file corresponding to the file identifier is read from the specified storage medium, and the initial position point and the target position point are substituted into the service flow file. On this basis, the service flow file can be executed to control the carrier movement.

When the service flow file is executed to control the carrier movement, the task flow of the service flow file can be initiated, instantiating the task flow and driving the task flow execution. During the execution of the task flow, when the resource application node is reached, an application can be sent to the model building device for a desired resource; when the peripheral control node is reached, a request is sent to the peripheral control device for peripheral control; when the robot task node is reached, a robot task is distributed to the robot control device, and the completion of the robot task is awaited. When the task flow is at an event node waiting for message trigger, the task flow can be continued by resource change message, peripheral notification message, and robot execution stage message based on trigger mechanism of the service flow engine until the flow is ended.

**In** one possible implementation, when the service flow file orchestrated in the task orchestration process is executed to control the carrier movement, one example of the task execution can include steps 11 to 15.

At step 11, a target carrier is applied for, where the target carrier is to be moved from an initial position point to a target position point.

At step 12, if the initial position point and the target position point are cross-map position points, a first handover point in the same map as the initial position point and a second handover point in the same map as the target position point are determined.

At step S13, if the target carrier is moved in a cross-device mode, a first target type corresponding to the initial position point and a second target type corresponding to the target position point are determined.

At step S14, the target carrier is moved by a robot of the first target type from the initial position point to the first handover point, and a resource request message is sent to a peripheral control device so that the peripheral control device moves the target carrier from the first handover point to the second handover point and returns a resource in-place message.

At step 15, after the resource in-place message returned by the peripheral control device is received, the target carrier is moved by a robot of the second target type from the second handover point to the target position point.

Illustratively, after the first handover point in the same map as the initial position point and the second handover point in the same map as the target position point are determined, if the target carrier is moved in a following mode, the first target type corresponding to the initial position point is determined; the target carrier is moved by the robot of the first target type from the initial position point to the first handover point, and a resource request message is sent to the peripheral control device so that the peripheral control device moves the robot and the target carrier from the first handover point to the second handover point and returns the resource in-place message. After the resource in-place message returned by the peripheral control device is received, the target carrier is moved by the robot of the second target type from the second handover point to the target position point.

Illustratively, if the first handover point and the second handover point are on different floors, the peripheral control device is used to control the target elevator to move from the floor where the first handover point is located to the floor where the second handover point is located. On this basis, moving the target carrier by the robot of the first target type from the initial position point to the first handover point may include but not limited to: if no free position is present in the target elevator, selecting a first free buffer point as a target buffer point from multiple buffer points outside the target elevator, and moving the target carrier by the robot of the first target type from the initial position point to the target buffer point; where multiple buffer points are sorted in an ascending order of distance, and the distance is a distance between the buffer point and the target elevator.

If a new free buffer point is present before the target buffer point, the target carrier is moved by the robot of the first target type to the free buffer point. If a free position is present in the target elevator, the target carrier is moved by the robot of the first target type to the first handover point in the target elevator.

**Illustratively,** before the target carrier is moved by the robot of the second target type from the second handover point to the target position point: while the target carrier is moved by the robot of the first target type from the initial position point to the first handover point, the robot of the second target type is moved synchronously to an associated position point corresponding to the second handover point; or, while the peripheral control device moves the target carrier from the first handover point to the second handover point, the robot of the second target type is moved synchronously to the associated position point corresponding to the second handover point; where the distance between the associated position point and the second handover point is less than a threshold.

Illustratively, if the first handover point and the second handover point are on different floors, the peripheral control device is used to control the target elevator to move from the floor where the first handover point is located to the floor where the second handover point is located. On this basis, a resource request message is sent to the peripheral control device so that, before the peripheral control device moves the target carrier from the first handover point to the second handover point, if a new task for the target carrier is received and the new task is used to move the target carrier to a candidate position point of the floor where the first handover point, the movement task from the first handover point to the second handover point is canceled, and the target carrier is moved to the candidate position point by the robot of the first target type.

Illustratively, after the target carrier is applied for, if the initial position point and the target position point are position points in a same map, a third target type corresponding to the initial position point and the target position point is determined; the target carrier is moved from the initial position point to the target position point by a robot of the third target type.

Illustratively, if the service flow file is a service flow file for a dense storage scene, before the target carrier is moved by the robot of the first target type from the initial position point to the first handover point, the following method can be adopted: if another carrier is present on the outer layer of the target carrier and a storage area for placing another carrier is present, the another carrier can be moved to the storage area. After no another carrier is present on the outer layer of the target carrier, the target carrier can be moved to the robot of the first target type (i.e. the target carrier is moved onto the robot of the first target type). After the target carrier is moved to the robot of the first target type, another carrier can be moved to the placement position of the target carrier, or the another carrier is moved to the original position of the another carrier, or the another carrier is maintained in the storage area.

Illustratively, for the service flow file in the above process, the service flow file is a service flow file for an aisle scene, or a service flow file for a dense storage scene, or a service flow file for an elevator scene, or a service flow file for a stacking scene, or a service flow file for a peripheral automation scene, or a service flow file for a high-bay rack and double-deep scene, or a service flow file for a progressive exchange scene, or a service flow file for a buffer progressive scene, which is not limited herein.

In one possible implementation, when the service flow file orchestrated in the task orchestration process is executed to control the carrier movement, one example of the task execution may include the following:

If the service flow file is a service flow file for the multi-vehicle type handover scene, a first carrier, a handover storage node and a storage node of the target position point can be applied for and the first vehicle type can be queried for.

If there is no cross-map task for the first carrier, the handling task can be performed by a robot of a first vehicle type to move the first carrier from the initial position point to the handover storage node; after the handling task is completed, a second carrier is applied for, where the second carrier is on the first carrier; a second vehicle type is queried for, and the handling task is performed by a robot of the second vehicle type to move the second carrier from the handover storage node to the target position point.

If there is a cross-map task for the first carrier, a first handover point in the same map as the initial position point and a second handover point in the same map as the handover storage node are determined; the first carrier is moved by the robot of the first vehicle type from the initial position point to the first handover point, and a resource request message is sent to the peripheral control device so that the peripheral control device can move the first carrier from the first handover point to the second handover point and return a resource in-place message; after the resource in-place message returned by the peripheral control device is received, the first carrier is moved by the robot of the first vehicle type from the second handover point to the handover storage node; after the handling task is completed, the second carrier is applied for, where the second carrier is on the first carrier; the second vehicle type is queried for, and the handling task is performed by the robot of the second vehicle type to move the second carrier from the handover storage node to the target position point.

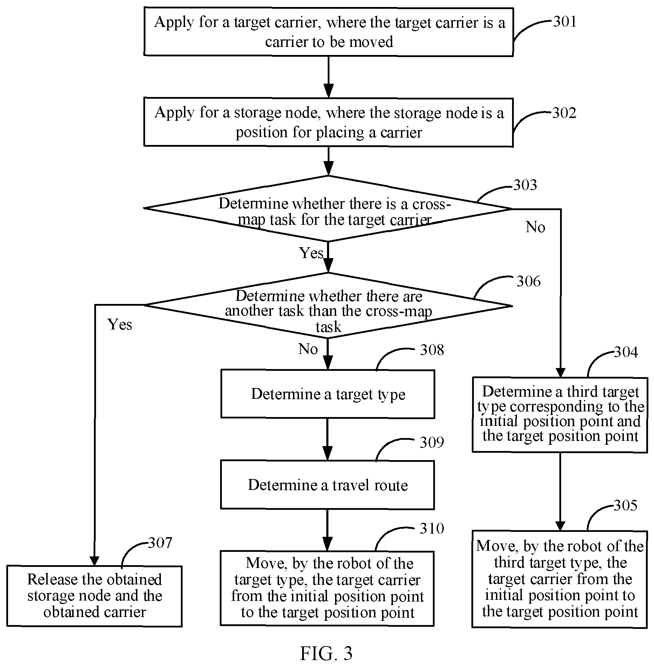

In one possible implementation, in order to realize the task execution function, the service flow file is a service flow file for an aisle scene, or a service flow file for a dense storage scene, or a service flow file for an elevator scene, or a service flow file for a stacking scene, or a service flow file for a peripheral automation scene, or a service flow file for a high-bay rack and double-deep scene, or a service flow file for a progressive exchange scene, or a service flow file for a buffer progressive scene. FIG. 3 is a flowchart of a task execution method. As shown in FIG. 3, the method may include steps 301 to 310.

At step 301, a target carrier is applied for, where the target carrier is a carrier to be moved. The target carrier is to be moved from an initial position point (refer to the position point where the target carrier is located currently as the initial position point) to a target position point (refer to the position point that the target carrier is finally moved to as the target position point).

Illustratively, the target carrier can be queried for based on an input condition, for example, a user can input the information of the target carrier (e.g. a unique identifier or type of the target carrier, where the unique identifier or type is used as the input condition). This way, the target carrier corresponding to this information can be found and applied for.

When the target carrier is applied for, query for the carrier from a bin, site and aisle is supported, namely, the target carrier may be a carrier in a bin, or a carrier in a site or a carrier in an aisle.

When the target carrier is applied for, query for a temporary carrier or unbound carrier is supported, namely, the target carrier may be a temporary carrier not maintained by the model building device, or an unbound carrier.

Illustratively, after the target carrier is obtained, an outbound lock identifier can also be added to the target carrier to indicate the target carrier is locked by a current task and the current task is to be performed for the target carrier. After the current task is completed, the outbound lock identifier is canceled to allow the target carrier to be applied for by another task later.

Illustratively, when the target carrier is applied for, if the target carrier already has an outbound lock identifier, namely, if the target carrier is already occupied by another task, the target carrier cannot be applied for by this current task and it is required to repeat the application for this target carrier. When the application for the target carrier is repeated, namely, the target carrier is queried for cyclically, the trigger can be made by a timer or region state update. For example, each time the timer expires, the target carrier is applied for again until the target carrier is successfully obtained. Or, each time the region state is updated (the target carrier may be any carrier in a region), the target carrier is applied for again until the target carrier is successfully obtained.

Illustratively, when the target carrier is applied for, if there are multiple carriers satisfying the input condition (e.g. the input condition is the type of the target carrier, and there are multiple carriers satisfying the type), a distance from each carrier to the target position point can be calculated and a carrier with the shortest distance from the target position point is used as the target carrier.

Illustratively, when the target carrier is applied for, if the target carrier supports multiple tasks (i.e. multiple tasks can be performed for the target carrier at the same time), even if the target carrier has an outbound lock identifier, namely, the target carrier is occupied by another task, the current task can also obtain the target carrier.

Illustratively, when the target carrier is applied for, if the target carrier supports an empty carrier task (i.e. the option of the empty carrier task is selected), whether the target carrier is an empty carrier or a loaded carrier, the target carrier can be obtained. If the target carrier does not support an empty carrier task, when the target carrier is an empty carrier, the target carrier cannot be obtained; when the target carrier is a loaded carrier, the target carrier can be obtained.

Illustratively, if the target carrier is successfully obtained, the step 302 can be performed; if the target carrier is not obtained, the application is ended without carrier. In a subsequent process, the application for the target carrier is to be repeated.

Illustratively, when the target carrier is successfully obtained, whether the target carrier supports multiple tasks is determined; if not, the step 302 is performed; if yes, it means the target carrier supports multiple tasks, and whether there is a cross-map map for the target carrier can also be determined. If there is no cross-map task, the step 302 is performed. If there is a cross-map task, the target carrier is released (namely, the target carrier is released for the current task), the current task is not processed. After a preset time interval (e.g. 10 seconds), the target carrier is applied for again and the determination on whether there is a cross-map task for the target carrier is continued. If there is no cross-map task, it means the cross-map task is already processed and the step 302 is performed; if there is a cross-map task, the target carrier is released and so on.

Illustratively, if the current task A successfully obtains the target carrier and the target carrier is already occupied by the task B, the task A and the task B are a cross-map task and the target carrier is released; if the task A and the task B are not a cross-map task, the step 302 is performed. If the target position point of the task A and the target position point of the task B are in different maps, it indicates they are a cross-map task; if the target position point of the task A and the target position point of the task B are in a same map, it indicates they are not a cross-map task. The different maps can be understood as different warehouses, different factory areas, and different floors, which is not limited herein.

At step 302, a storage node (i.e. a storage object) is applied for, where the storage node is a position for placing a carrier.

For example, the position point where the target carrier is currently located is the initial position point, and it is required to apply for the initial position point (the initial position point is the storage node) to indicate the current task needs to occupy the initial position point. The initial position point may be a site, bin, aisle or workstation or the like. The position point to which the target carrier is finally moved is the target position point, and it is required to apply for the target position point (the target position point is the storage node) to indicate the current task needs to occupy the target position point. The target position point may be a site, bin, aisle and workstation or the like. In a movement process of the target carrier, the target carrier can be placed at one/some position points (e.g. handover point and buffer points and the like) between the initial position point and the target position point. This/these position points can also be referred to as storage node and it is required to apply for the storage node to indicate the current task needs to occupy the storage node. The storage node may be a site, bin, or aisle or the like. For example, the handover point can be a site, and the buffer point can be a site, or bin or the like.

Illustratively, the storage node can be queried for based on the input condition. For example, the user can input the information of the storage node (e.g. the region of the storage node and the identifier of the storage node and the like), and query for a storage node corresponding to this information and apply for the storage node. When the storage node is applied for, query for the storage node from the bin, site and aisle is supported, namely, the storage node may be a storage node in the bin, or a storage node in the site or a storage node in the aisle.

Illustratively, when the storage node is applied for, for the initial position point, if the storage node is an inner storage node, an outer storage node of the storage node can be applied for first; after the carrier of the outer storage node is removed, the storage node is applied for again and then the target carrier of the storage node is moved.

Illustratively, after the storage node is obtained, an inbound lock identifier can be added to the storage node to indicate the storage node is locked by the current task and the current task is to be performed for the storage node. After the current task is completed, the inbound lock identifier is canceled to allow the storage node to be applied for by another task.

Illustratively, when a storage node is applied for, if this storage node has an inbound lock identifier, namely, this storage node is occupied by another task, the current task cannot obtain the storage node and it is required to repeatedly apply for the storage node. When the application for the storage node is repeated, namely, the storage node is queried for cyclically, the trigger can be made by a timer or region state update. For example, each time the timer expires, the storage node is applied for again until the storage node is successfully obtained. Or, each time the region state is updated (the storage node may be any node in a region), the storage node is applied for again until the storage node is successfully obtained.

Illustratively, when a storage node is applied for, if there is a queue in the storage node, for example, if there is a queue in the storage node of workstation, even if the storage node already has an inbound lock identifier, namely, the storage node is occupied by another task, the current task can also obtain the storage node.

In one possible implementation, when the storage node is applied for, the following method can be used: parameters (i.e. the information of the storage node, such as the region of the storage node and the identifier of the storage node and the like) are parsed first; a number of retries is incremented (i.e. increment the number of retries by one); then, a site matching the parameters is queried for from all sites and is obtained as the storage node; or, a bin matching the parameters is queried for from all bins and is obtained as the storage node; or, an aisle matching the parameters is queried for from all aisles and is obtained as the storage node.

Whether the storage node (e.g. site, bin, and aisle and the like) is successfully obtained is determined; if yes, the storage node is successfully obtained and the step 303 is performed; if not, whether the number of retries reaches a preset threshold (e.g. 3 or 5 or the like) is determined; if the number of retries reaches the preset threshold, it indicates that the storage node is not successfully obtained and the application is ended without storage node. In a subsequent process, the step 301 is performed again.

If the number of retries does not reach the preset threshold, it is required to repeatedly apply for the storage node, namely, query for the storage node cyclically, and the repeated application for the storage node may be triggered by the timer or region state update. When the repeated application for the storage node is triggered, the operation of "the parameters are parsed" is repeated to the repeat the above step.

At step 303, whether there is a cross-map task for the target carrier is determined. If there is no cross-map task, the step 304 is performed; if there is a cross-map task, the step 306 is performed.

Illustratively, if the current task A obtains the target carrier, it is required to determine whether there is a cross-map task for the task A. For example, if the initial position point of the target carrier and the target position point of the target carrier are cross-map position points, it indicates that there is a cross-map task. If the initial position point of the target carrier and the target position point of the target carrier are position points in a same map, it indicates that there is no cross-map task.

Different maps can be understood as different warehouses, different factory areas and different floors. Taking different floors as example, if the initial position point and the target position point are on different floors, they are cross-map position points; if the initial position point and the target position point are on a same floor, they are positions points in a same map.

At step 304, if the initial position point and the target position point are position points in a same map (namely, there is no cross-map task), a third target type corresponding to the initial position point and the target position point is determined. The third target type is a robot type, such as forklift, automated guided vehicle and case-handling robot and the like.

Illustratively, a vehicle type supported by the target carrier (i.e. robot type, which indicates that a robot of the vehicle type is allowed to move the target carrier), a vehicle type supported by the initial position point (indicating a robot of the vehicle type is allowed to reach the initial position point), a vehicle type supported by the target position point (indicating a robot of the vehicle type is allowed to reach the target position point) can be obtained. An intersection of the above vehicle types is used as the third target type.

For example, if the intersection of the above vehicle types is one vehicle type, the one vehicle type is used as the third target type. If the intersection of the above vehicle types is multiple vehicle types, one vehicle type is selected as the third target type from the multiple vehicle types. If the intersection of the above vehicle types is empty, the third target type cannot be determined and an exception can be reported.

For example, after the intersection of the above vehicle types is used as the third target type, if the model of the robot of the third target type is inconsistent with the model (or referred to as vehicle number indicating the user needs to use a robot of this model) input by the user, it indicates that the third target type has an error and an exception can be reported.

Illustratively, if a vehicle type supported by the target carrier is not configured (namely, the robots of all vehicle types are allowed to move the target carrier), and a vehicle type supported by the initial position point is not configured (namely, the robots of all vehicle types are allowed to reach the initial position point), and a vehicle type supported by the target position point is not configured (namely, the robots of all vehicle types are allowed to reach the target position point), any vehicle type is used as the third target type.

At step 305, the target carrier is moved by the robot of the third target type from the initial position point to the target position point. For example, a handling task is performed by selecting one robot of the third target type and the robot moves the target carrier from the initial position point to the target position point. This handling process is not limited herein.

For example, the robot is firstly controlled to move to the initial position point and then the target carrier is placed on the robot and then the target carrier is moved by the robot from the initial position point to the target position point.

Illustratively, in a dense storage scene (i.e. there is a scene with the inner carrier and an outer carrier, and the inner carrier can be placed on the robot only by removing the outer carrier), if there is another carrier on the outer layer of the target carrier, the robot is controlled to move to the initial position point and then move the another carrier on the outer layer to another region and then the target carrier is placed on the robot.

At step 306, if the initial position point and the target position point are cross-map position points (i.e. there is a cross-map task), whether there are another task than the cross-map task is determined.

If there is another task, the step 307 is performed; if there is no another task, the step 308 is performed.

**At** step 307, the obtained storage node and the obtained carrier are released.

For example, the current task A obtains the target carrier, and there is a cross-map task for the task A and the target carrier is already occupied by the task B (this case occurs in the scene where the target carrier supports multiple tasks). If the task A requires movement from the first floor to the second floor and the task B requires movement from a certain position of the first floor to another position, the task B is firstly performed and after the task B is completed, the task A is performed. For this reason, if there is another task B other than the cross-map task A, the obtained storage node (the storage node obtained for the task A) and the obtained target carrier (the storage carrier obtained for the task A) can be released. After a preset time interval (e.g. 10 seconds), the target carrier is applied for again for the task A and the step 301 is repeated and so on until the task B is completed and there is no another task other than the cross-map task A.

At step 308, if the initial position point and the target position point are cross-map position points, a target type is determined. The target type is a robot type, such as a forklift, an automated guided vehicle and a case-handling robot and so on.

Illustratively, the target carrier may be moved in a cross-device mode (namely, the target carrier is carried on different robots in a cross-map movement), and the target carrier may also be moved in a following mode (namely, the target carrier is carried on a same robot in a cross-map movement). On this basis, if the target carrier is moved in the cross-device mode, a first target type corresponding to the initial position point and a second target type corresponding to the target position point are determined. If the target carrier is moved in the following mode, the first target type corresponding to the initial position point is determined.

Illustratively, when the first target type corresponding to the initial position point is determined, a vehicle type supported by the target carrier (representing allowing a robot of the vehicle type to move the target carrier) and a vehicle type supported by the initial position point (representing allowing a robot of the vehicle type to reach the initial position point) can be obtained, and an intersection of the above vehicle types is determined as the first target type. For example, when the intersection of the above vehicle types is one vehicle type, the one vehicle type is determined as the first target type. If the intersection of the above vehicle types is empty, the first target type cannot be determined.

Illustratively, when the second target type corresponding to the target position point is determined, a vehicle type supported by the target carrier and a vehicle type supported by the target position point (representing allowing a robot of the vehicle type to reach the target position point) can be determined, and then an intersection of the above vehicle types is determined as the second target type.

At step 309, a travel route is determined. For example, a first handover point in the same map as the initial position point, and a second handover point in the same map as the target position point are determined. A travel route between the initial position point and the first handover point and a travel route between the second handover point and the target position point are determined.

Illustratively, the first handover point is a start point for handing over the target carrier to the peripheral control device, and the second handover point is an ending point for handing over the target carrier to the peripheral control device, namely, the peripheral control device controls the target carrier to move from the first handover point to the second handover point. For example, taking the initial position point and the target position point on different floors as example, the first handover point is on the same floor A as the initial position point, and the first handover point is any position point in the target elevator on the floor A. For example, when the target elevator is on the floor A, a certain position point in the target elevator is determined as the first handover point. Furthermore, the second handover point is on the same floor B as the target position point, and the second handover point is any position point in the target elevator on the floor B. For example, when the target elevator is on the floor B, a certain position point in the target elevator is determined as the second handover point.

Illustratively, after the first handover point is determined, a travel route between the initial position point and the first handover point can be determined. For example, the travel route can be determined based on A* algorithm, or determined by a particular strategy, which is not limited herein. In addition, after the second handover point is determined, a travel route between the second handover point and the target position point can be determined. For example, the travel route can be determined based on A* algorithm, or determined by a particular strategy, which is not limited herein.

Illustratively, if the travel route between the initial position point and the first handover point is successfully obtained and the travel route between the second handover point and the target position point is successfully obtained, the step 310 is performed. If the travel route between the initial position point and the first handover point is not obtained and/or the travel route between the second handover point and the target position point is not obtained, the process is ended without route. In a subsequent process, the step 301 is repeated.

At step 310, the target carrier is moved by the robot of the target type (e.g. the robot of the first target type and/or the robot of the second target type) from the initial position point to the target position point. Namely, the handling task is performed by the robot of the target type to move the target carrier from the initial position point to the target position point across map.

For example, if the target carrier is moved in the cross-device mode, the target carrier is moved by the robot of the first target type from the initial position point to the first handover point. For example, the robot of the first target type is firstly controlled to move to the initial position point, and then the target carrier is placed on the robot, and then the target carrier is moved by the robot of the first target type from the initial position point to the first handover point. Afterwards, the target carrier is moved by the robot of the second target type from the second handover point to the target position point. For example, the robot of the second target type is firstly controlled to move to the second handover point, and the target carrier is placed on the robot, and then the target carrier is moved by the robot of the second target type from the second handover point to the target position point.

**For** another example, if the target carrier is moved in the following mode, the target carrier is moved by the robot of the first target type from the initial position point to the first handover point. For example, the robot of the first target type is firstly controlled to move to the initial position point, and then the target carrier is placed on the robot, and then the target carrier is moved by the robot of the first target type from the initial position point to the first handover point. The target carrier is moved by the robot of the first target type (i.e. the robot type is unchanged) from the second handover point to the target position point. For example, the robot of the first target type is moved to the second handover point from the first handover point, and then the target carrier is moved directly by the robot of the first target type from the second handover point to the target position point.

Illustratively, in a dense storage scene, if there is another carrier on the outer layer of the target carrier, after the robot of the first target type is controlled to move to the initial position point, the another carrier on the outer layer is firstly moved to another region, and then the target carrier is placed on the robot of the first target type.

For the step 310, when the target carrier is moved from the initial position point to the target position point across map, the target carrier can be moved in the cross-device mode or in the following mode.

If the target carrier is moved in the cross-device mode, the target carrier is moved by the robot of the first target type from the initial position point to the first handover point, and a resource request message is sent to the peripheral control device. After receiving the resource request message, the peripheral control device moves the target carrier from the first handover point to the second handover point, and returns a resource in-place message. After the resource in-place message returned by the peripheral control device is received, the target carrier is moved from the second handover point to the target position point by the robot of the second target type.

If the target carrier is moved in the following mode, the target carrier is moved by the robot of the first target type from the initial position point to the first handover point, and a resource request message is sent to the peripheral control device. After receiving the resource request message, the peripheral control device moves the robot and the target carrier together from the first handover point to the second handover point, and returns a resource in-place message. After the resource in-place message returned by the peripheral control device is received, since the target carrier is still on the robot of the first target type, the target carrier is moved directly from the second handover point to the target position point by the robot of the first target type.

The first handover point and the second handover point may be handover points on different floors. For example, the first handover point is any position point in the target elevator on the floor A, and the second handover point is any position point in the target elevator on the floor B, and the first handover point and the second handover point may also be handover points of another type, which is not limited herein as long as the peripheral control device can move the target carrier from the first handover point to the second handover point. In a subsequent process, taking the handover points on different floors as example, a cross-map movement process of the target carrier will be described.

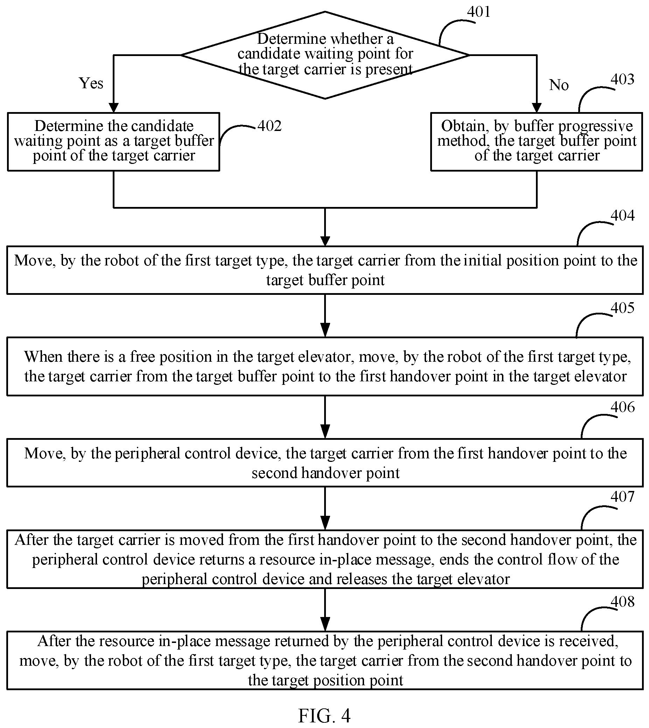

FIG. 4 is a schematic diagram of moving the target carrier from the initial position point to the target position point across map when the target carrier is moved in the following mode. As shown in FIG. 4, the cross-map movement process includes steps 401 to 408.

At step 401, whether a candidate waiting point for the target carrier is present (e.g. a position point outside the target elevator as the candidate waiting point) is determined; if yes, step 402 is performed; if not, step 403 is performed.

At step 402, the candidate waiting point is determined as a target buffer point of the target carrier.

At step 403, the target buffer point of the target carrier is obtained by buffer progressive method.

At step 404, the target carrier is moved by the robot of the first target type from the initial position point to the target buffer point, namely, the target carrier is temporarily queued at the target buffer point and has not been moved to the first handover point.

Illustratively, if there is no free position in the target elevator, steps 401 to 404 are performed to move the target carrier from the initial position point to the target buffer point; if there is a free position in the target elevator, the target carrier is directly moved from the initial position point to the first handover point, and the steps 401 to 404 are not performed.

Illustratively, if a certain position point outside the target elevator is configured as a candidate waiting point for the target carrier, the candidate waiting point is directly determined as the target buffer point of the target carrier. If no candidate waiting point is configured for the target carrier, the target buffer point of the target carrier can be obtained by buffer progressive method.

For example, there are multiple buffer points outside the target elevator and the multiple buffer points are sorted in an ascending order of distance, where the distance is a distance from the buffer point to the target elevator. For example, there are a buffer point a1, a buffer point a2, and a buffer point a3; the distance between the buffer point a1 and the target elevator is less than the distance between the buffer point a2 and the target elevator, and the distance between the buffer point a2 and the target elevator is less than the distance between the buffer point a3 and the target elevator.

A first free buffer point is selected as the target buffer point from multiple buffer points outside the target elevator, and the free buffer point is a buffer point with a free position (available for placing the target carrier). For example, whether the buffer point a1 is a free buffer point is firstly determined; if yes, the buffer point a1 is determined as the target buffer point; if not, whether the buffer point a2 is a free buffer point is determined; if yes, the buffer point a2 is determined as the target buffer point; if not, whether the buffer point a3 is a free buffer point is determined and so on until the target buffer point is found.

**In** order to realize buffer progressive, after the target carrier is moved from the initial position point to the target buffer point, whether a new free buffer point appears before the target buffer point can be detected. If there is a new free buffer point before the target buffer point, the target carrier can be moved by the robot of the first target type to the new free buffer point so that the distance between the target carrier and the target elevator is increasingly shortened. Thus, when there is a free position in the target elevator, the target carrier can be moved quickly to the first handover point in the target elevator.

For example, if the buffer point a3 is determined as the target buffer point, whether the buffer point a2 is a new free buffer point can be detected periodically. If not, the target buffer point is maintained unchanged; if yes, the buffer point a2 is determined as the target buffer point and the target carrier is moved from the buffer point a3 to the buffer point a2. Then, whether the buffer point a1 is a new free buffer point is detected periodically and so on until the target carrier is moved to the first buffer point outside the target elevator. When there is a free position in the target elevator, the target carrier is moved to the first handover point.

At step 405, when there is a free position in the target elevator, the target carrier is moved by the robot of the first target type from the target buffer point to the first handover point in the target elevator. For example, if the target carrier is already at the first buffer point outside the target elevator, the target carrier is moved to the first handover point.

When the target carrier is moved in the following mode, the robot of the first target type and the target carrier are synchronously moved to the first handover point, and the target carrier is still on the robot of the first target type.

Illustratively, before the target carrier is moved from the target buffer point to the first handover point in the target elevator, a resource request message can also be sent to the peripheral control device. After receiving the resource request message, the peripheral control device can open the door of the target elevator. Thus, the robot of the first target type can move the target carrier to the first handover point in the target elevator from the target buffer point.

At step 406, the peripheral control device moves the target carrier from the first handover point to the second handover point.

Illustratively, after the target carrier is moved to the first handover point in the target elevator, a control flow of the peripheral control device can also be performed. In other words, the peripheral control device moves the target carrier to the second handover point from the first handover point. For example, the target elevator is controlled to move from the floor where the first handover point is located to the floor where the second handover point is located, so as to move the target carrier from the first handover point to the second handover point.

Illustratively, in the control process of the peripheral control device, whether the target elevator is abnormal can be detected; if the target elevator is abnormal, elevator switching can be performed or a warning message for indicating the target elevator is abnormal is output.

Illustratively, before the target carrier is moved to the first handover point in the target elevator, whether an interruption event is present can also be detected. If yes, the current task can be canceled and the target carrier is not moved to the first handover point in the target elevator. For example, if a new task obtains the target carrier and the target position point of the new task is not on the floor where the second handover point is located, the new task may be an interruption event. When the new task is performed, there is no need to move the target carrier to the floor where the second handover point is located. Therefore, the current task is canceled.

For example, before a resource request message is sent to the peripheral control device so that the peripheral control device can move the target carrier from the first handover point to the second handover point, if a new task for the target carrier is received and the new task is used to move the target carrier to a candidate position point of the floor where the first handover point is located (i.e. the candidate position point is not the position point of the floor where the second handover point is located), the movement task from the first handover point to the second handover point is canceled, and the target carrier is moved by the robot of the first target type to the candidate position point.

At step 407, after the target carrier is moved from the first handover point to the second handover point, the peripheral control device returns a resource in-place message, ends the control flow of the peripheral control device and releases the target elevator.

At step 408, after the resource in-place message returned by the peripheral control device is received, switching can be performed to a new map, namely, to the new map of the floor where the target position point is located. In the new map, the target carrier is moved by the robot of the first target type from the second handover point to the target position point.

Till then, the target carrier is successfully moved from the initial position point to the target position point across map.

In one possible implementation, each time there is a carrier entering into the target elevator, the number of the carriers in the target elevator can be increased; each time there is a carrier leaving the target elevator, the number of the carriers in the target elevator can be decreased. Thus, if the number of the carriers in the target elevator is greater than a threshold, it indicates that there is no free position in the target elevator. If the number of the carriers in the target elevator is not greater than the threshold, it indicates that there is a free position in the target elevator.

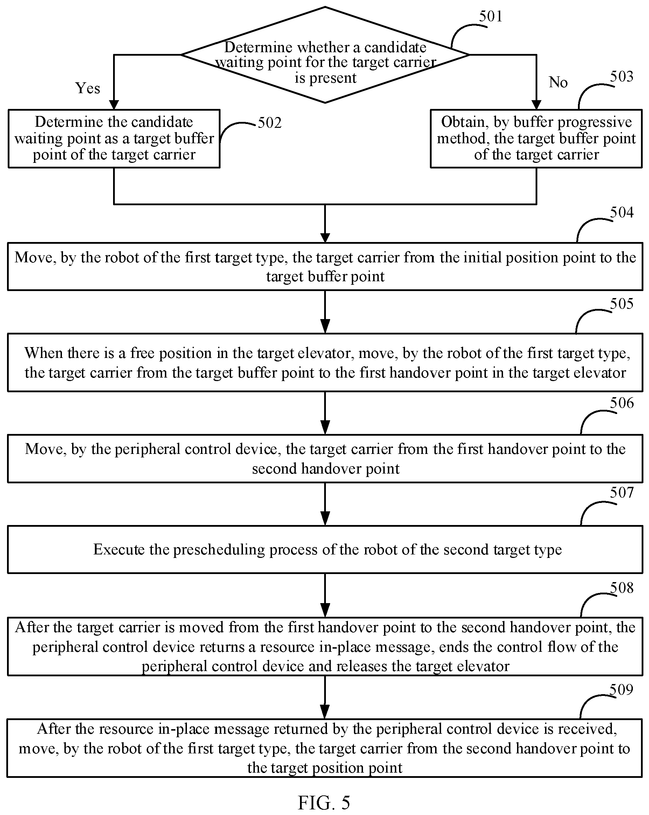

FIG. 5 is a schematic diagram of moving the target carrier from the initial position point to the target position point across map when the target carrier is moved in the cross-device mode. As shown in FIG. 5, the cross-map movement process includes steps 501 to 509.

At step 501, whether a candidate waiting point of the target carrier (e.g. a certain position point outside the target elevator is used as the candidate waiting point) is present is determined; if yes, step 502 is performed; if not, step 503 is performed.

At step 502, the candidate waiting point is used as a target buffer point of the target carrier.

At step 503, the target buffer point of the target carrier is obtained by buffer progressive method.

At step 504, the target carrier is moved by the robot of the first target type from the initial position point to the target buffer point, namely, the target carrier is queued temporarily at the target buffer point and has not been moved to the first handover point.

At step 505, when there is a free position in the target elevator, the target carrier is moved by the robot of the first target type from the target buffer point to the first handover point in the target elevator. For example, if the target carrier is already at the first buffer point outside the target elevator, the target carrier can be moved to the first handover point.

Illustratively, the steps 501 to 505 are similar to the steps 401 to 405 and will not be repeated herein except for the difference as below: when the target carrier is moved in the cross-device mode, the robot of the first target type places the target carrier at the first handover point and then leaves without moving together with the target carrier to the second handover point synchronously.

At step 506, the peripheral control device moves the target carrier from the first handover point to the second handover point.

Illustratively, the peripheral control device can control the target elevator to move from the floor where the first handover point is located to the floor where the second handover point is located, so as to move the target carrier from the first handover point to the second handover point.

Illustratively, before a resource request message is sent to the peripheral control device so that the peripheral control device can move the target carrier from the first handover point to the second handover point, if a new task for the target carrier is received and the new task is used to move the target carrier to the candidate position point of the floor where the first handover point is located (the candidate position point is not the position point of the floor where the second handover point is located), the movement task from the first handover point to the second handover point is canceled, and the target carrier is moved by the robot of the first target type to the candidate position point.

At step 507, the prescheduling process of the robot of the second target type is executed.

For example, in the process of moving the target carrier by the robot of the first target type from the initial position point to the first handover point (steps 501 to 505), the robot of the second target type is synchronously moved to an associated position point corresponding to the second handover point. Or, in the process of moving the target carrier by the peripheral control device from the first handover point to the second handover point (step 506), the robot of the second target type is moved synchronously to an associated position point corresponding to the second handover point. The distance between the associated position point and the second handover point is less than a threshold. For example, the associated position point may be a position point outside the target elevator. After the door of the target elevator is opened, the robot of the second target type can directly enter the target elevator from the associated position point.

At step 508, after the target carrier is moved from the first handover point to the second handover point, the peripheral control device returns a resource in-place message, ends the control flow of the peripheral control device and releases the target elevator.

At step 509, after the resource in-place message returned by the peripheral control device is received, switching is performed to a new map, i.e. to the new map of the floor where the target position point is located. In the new map, the target carrier is moved by the robot of the second target type from the second handover point to the target position point. For example, the robot of the second target type is controlled to move to the second handover point of the target elevator, and the target carrier is placed on the robot of the second target type and moved from the second handover point to the target position point.

Till then, the target carrier is successfully moved from the initial position point to the target position point across map.

**In** one possible implementation, for the service flow file of the dense storage scene, before the target carrier is moved by the robot of the first target type from the initial position point to the first handover point: if there is another carrier on the outer layer of the target carrier and a storage area for placing the another carrier is present, the another carrier is moved to the storage area. After no another carrier is present on the outer layer of the target carrier, the target carrier can be moved to the robot of the first target type (i.e. the target carrier is moved onto the robot).

After the target carrier is moved to the robot of the first target type, another carrier can also be moved to a placement position of the target carrier (i.e. place at an inner position where the target carrier is located), or another carrier can be moved to an original position of the another carrier (i.e. place at an outer position where the another carrier is located), or another carrier can be maintained in the storage area (i.e. not change the position of the another carrier any longer).

In one possible implementation, in order to achieve the task execution function, for the service flow file of the multi-vehicle type handover scene, that is, in the multi-vehicle handover task scene (e.g. handover between latent vehicle and forklift), the method may include: firstly applying for a first carrier, for example, a goods rack with pallet; if the first carrier is not successfully obtained, ending the process without carrier; If the first carrier is successfully obtained, applying for a site (e.g. a handover site, where the storage node is taken as site herein); if the handover site is not successfully obtained, ending the process without handover site; if the handover site is not successfully obtained, applying for a site (e.g. the site of the target position point); if the site of the target position point is not successfully obtained, ending the processing without the site of the target position point; if the site of the target position point is successfully obtained, querying for the first vehicle type; with the robot of the first vehicle type being lifting vehicle as example, the lifting vehicle is selected.

If there is no cross-map task for the first carrier, the handling task is performed by the lifting vehicle. After the handling task of the lifting vehicle is completed, the second carrier, for example, a pallet on a goods rack (i.e. the second carrier on the first carrier), is applied for. The second vehicle type is queried for, and with the robot of the second vehicle type being forklift as example, the forklift is selected. The handling task is performed by the forklift. After the handling task of the forklift is completed, the flow is ended.

If there is a cross-map task for the first carrier, a route is queried for; if no route is found, the process is ended without route. If a route is found, the cross-map handling task is performed by the lifting vehicle. The cross-map handling task can be realized as shown in the above embodiment and will not be repeated herein. After the handling task of the lifting vehicle is completed, the second carrier, for example, a pallet on a goods rack (i.e. the second carrier on the first carrier) is applied for, and then the second vehicle type is queried for, and with the robot of the second vehicle type being forklift as example, the forklift is selected; and then the handling task is performed by the forklift.

In one possible implementation, in an aisle task scene, namely, for the service flow file of the aisle scene, when triggering the execution of the service flow file, the user can also tick the start point or ending point as aisle task. In the stacking task scene, for the service flow file of the stacking scene, when triggering the execution of the service flow file, the user can also tick whether to stack, for example, tick yes to stack. In the peripheral automated task scene, for the service flow file of the peripheral automated task scene, when triggering the execution of the service flow file, the user can also tick a handling task node: whether to apply to the peripheral for picking up or placing goods.

Fourthly, for the task following function of the task scheduling and following device

Illustratively, the task scheduling and following device can support the task following function. Based on the task following function, the task scheduling and following device can follow a task in the execution process so as to know which task the robot performs to and know the execution situation of the task. In the execution process of the task flow, which node the flow is executed currently to, which resources are obtained, which peripherals are controlled and which tasks the robot performs, how the message interaction process is, and whether there is an exception can be followed. In the execution process of the task flow, what variables the current node has and whether the variables are correct can be followed, and the values of the variables can be modified in real time and made valid immediately.

**If** the current task is on the robot task node, the immediate execution of the robot task can be triggered. Which node the task flow is performed to and which variables the node has can be known. The node variables can be modified and made valid immediately. If the task flow execution is exceptional, an exceptional node can be prominently marked. The error cause of the exceptional node can be viewed and after the exception is corrected, retry is clicked to allow the robot task to be continued.

In summary, in the task flow execution process, detection can be performed on the node currently executed for the task flow, the resource obtained for the task flow, the peripheral controlled for the task flow, the task executed by the robot, and whether the message interaction process is exceptional; when detection is performed on the node currently executed for the task flow, detection is performed on the variables present on the node and whether the variables are correct, and the values of the variables are allowed to be modified; when detection is performed on the node currently executed for the task flow, if the node executed currently is on the robot task node, the immediate execution of the robot task is triggered.

In one possible implementation, a capability of second development can be provided. For example, a toolkit (i.e. SDK development kit) can be opened, which may include but not limited to: handling object SDK, storage object SDK, elevator SDK, robot SDK, peripheral SDK and task SDK. These toolkits are used for the script development of the task orchestration. For another example, a custom node can be opened. When the system-designed nodes are insufficient, for example, when a new robot type is added, the user can develop a custom node and write the robot task descriptions, input parameters, output parameters, strategy scripts and node service logic of the new node. The custom node can be packaged into jar file and put under the lib directory. After system reboot, the jar file is loaded to the system and used in the editor of the robot task flow.

In a word, a toolkit of second development can also be provided. The toolkit may include but not limited to at least one of: handling object SDK, storage object SDK, elevator SDK, robot SDK, peripheral SDK and task SDK. If a second development instruction input by a user based on the toolkit is received, a task orchestration script is obtained based on the second development instruction, and the task orchestration script is used to orchestrate the service flow file; and/or, a development permission of the custom node can also be provided; if custom node information input by a user is received, the activity node and/or event node is generated based on the custom node information.

In one possible implementation, the service flow file is loaded into a service flow engine to control the carrier movement, namely, the service flow file is firstly loaded into the service flow engine, and then the service flow file is executed in the service flow engine to control the carrier movement.

The service flow engine may include but not limited to osworkflow service flow engine, jbpm service flow engine, BPMN standard-based activiti service flow engine, BPMN standard-based flowable service flow engine, and BPMN standard-based camunda service flow engine.

From the above technical solutions, it can be seen that in the embodiments of the present disclosure, based on the orchestration instruction input by the users, the service flow file is orchestrated in combination with the activity node and the event node, and the service flow file is used to control the carrier movement. Even if the movement scene of the target carrier, for example, the cross-elevator movement scene or the like, is relatively complex, the target carrier can be moved from a workstation to a warehouse to realize inbound material delivery, and moved from a warehouse to a workstation to realize outbound material delivery, so as to provide a reasonable control manner for the movement of the target carrier. A robot task scene can be orchestrated to move the target carrier from the initial position point to the target position point, so that the robot task execution is more reasonable, bringing up the on-site maintenance efficiency, lowering the operation maintenance costs, increasing the task execution efficiency and improving the user experience. By the node design and task orchestration design of the robot, a composite task scene can be orchestrated, increasing service flexibility and reducing the project development costs. In this way, the flexibility of the scheduling system can be improved and the development workload of the research and development personnel can be reduced. So, the problems of large customization work of the scheduling system, extensive business involvements and issues introduced by frequent code modifications in research and development can be solved. By the task execution and task following design of the robot, which step the task is performed to can be quickly known, thereby improving the on-site maintenance efficiency and reducing the operation maintenance costs. With the second development design of the robot service flow, the users can be enabled to develop nodes and service scenes on themselves, reducing the involvement of the research and development personnel of the system, lowering the research and development costs, and improving the implementation efficiency.

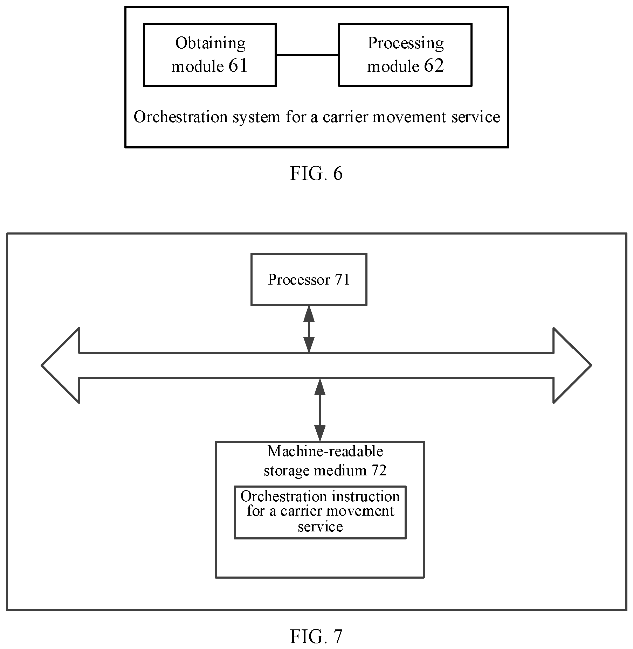

Based on the same application idea as the above method, an embodiment of the present disclosure provides an orchestration system for a carrier movement service (the orchestration system for the carrier movement service can also be referred to as an orchestration device for a carrier movement service). FIG. 6 is a schematic diagram illustrating a structure of the system. As shown in FIG. 6, the system includes: an obtaining module 61, configured to provide an activity node and an event node, where the activity node includes an orchestration object and its configuration parameters, and the configuration parameters of the orchestration object include input parameters, output parameters and functions of the orchestration object, and the orchestration object is a resource used in a carrier movement process; the event node includes a message object and its configuration parameters, the configuration parameters of the message object include functions of the message object, and the message object is a message for triggering a flow to be continued in a carrier movement process; and a processing module 62, configured to, based on carrier movement service orchestration information input by users, orchestrate a service flow file in combination with the activity node and the event node; where the service flow file is used to control the carrier movement.

Illustratively, the orchestration object in the activity node may include at least one of: a carrier object, where the carrier object represents a carrier to be moved in a carrier movement service; a storage node object, where the storage node object represents a position for placing a carrier in a carrier movement service; a vehicle type object, where the vehicle type object represents a robot type for placing a carrier in a carrier movement service; a route object, where the route object represents a movement route of a robot in a carrier movement service; a robot object, where the robot object represents a robot in a carrier movement service; and a peripheral resource object, where the peripheral resource object represents a peripheral resource in a carrier movement service.

Illustratively, the orchestration object in the activity node includes a carrier object, and the configuration parameters of the carrier object include at least one of: querying for a carrier based on input condition; supporting querying for a carrier from bin, site and aisle; supporting querying for a temporary carrier; supporting querying for an unbound carrier; after finding a carrier, adding an outbound lock identifier to the carrier; when cyclically querying for a carrier, triggering by timer or region state update; if a target position point is already input, querying for a carrier based on the carrier type of the target position point; if a target position point is already input, querying for a carrier based on a distance between the target position point and the carrier; if carrier multitasking is supported, ignoring carrier lock state; if empty carrier query is not selected, allowing querying for empty carrier and loaded carrier; if an unidentified carrier is supported, allowing querying for a temporary carrier; whether carrier stacking is supported.

Illustratively, the orchestration object in the activity node includes a storage node object and the configuration parameters of the storage node object include at least one of: querying for a storage object based on input condition; supporting querying for a storage object from bin, site and aisle; if a storage object is in an inner storage location, returning to a storage object of an outer storage location; after a storage object is found, adding an inbound lock identifier to the storage object; when cyclically querying for a storage object, triggering by timer or region state update; whether there is a queue in a storage object; if yes, ignoring the storage object lock state.

Illustratively, the orchestration object in the activity node includes a vehicle type object and the configuration parameters of the vehicle type object include at least one of: querying for an intersection of various vehicle type information; if vehicle types are not configured, defaulting all vehicle types to be available; if the vehicle types are configured, taking an intersection of the configured vehicle types; if the intersection is empty, reporting exception; if the vehicle types are inconsistent with the vehicle numbers, reporting exception.

Illustratively, the orchestration object in the activity node includes a route object, and the configuration parameters of the route object include at least one of: cross-map use, including combination of handover points of elevator and map; obtaining all routes leading to the target position point; updating a number of entry and exit tasks for an elevator in a route; filtering a disabled elevator or an elevator in abnormal state; before querying for a route again for elevator anomaly, firstly releasing a route; if one route spans multiple maps, performing cross-map node execution multiple times; when a cross-elevator task is completed, updating a number of entry and exit tasks for an elevator.

Illustratively, the orchestration object in the activity node includes a robot object, and the configuration parameters of the robot object include at least one of: executing an empty vehicle movement task; executing a loaded vehicle movement task; executing a handling task; executing a prescheduling task; executing an execution mechanism action task; executing a map switching task.

Illustratively, the orchestration object in the activity node includes a peripheral resource object, and the configuration parameters of the peripheral resource object include at least one of: based on input condition, querying for a peripheral resource and sending the peripheral resource to a peripheral control device; waiting for a feedback message from the peripheral control device; when the peripheral resource is disabled, directly returning without invoking an interface of the peripheral control device; when the peripheral resource is disabled, cyclically applying for the peripheral resource.

Illustratively, the message object in the event node includes at least one of: a resource change message object, where the resource change message object represents change of the resources of the orchestration object; a task continuation message object, where the task continuation message object represents the task is continued; a peripheral notification message object, where the peripheral notification message object includes a resource request message and a resource in-place message. The resource request message represents a peripheral resource is requested, and the resource in-place message represents the peripheral resource is ready; an robot execution message object, where the robot execution message object represents a message in an execution process

Illustratively, the service flow file includes multiple task nodes executed in sequence, and when, based on the carrier movement service orchestration information input by the user, the service flow file is orchestrated in combination with the activity node and the event node, the processing module 62 is specifically configured to: for each task node, if the task node is directed to the orchestration object, based on an orchestration object selection instruction input by the user, select a target orchestration object corresponding to the orchestration object selection instruction, and display configuration parameters of the target orchestration object; create the task node in the service flow file, where the task node includes the target orchestration object and an input condition input by the user based on the configuration parameters; if the task node is directed to the message object, based on the message object selection instruction input by the user, select a target message object corresponding to the message object selection instruction; create the task node in the service flow file, where the task node includes the target message object.

Illustratively, the processing module 62 is further configured to, after orchestrating the service flow file in combination with the activity node and the event node, store the service flow file in a specified storage medium.

The system further includes a controlling module, configured to, after receiving a task execution instruction including an initial position point, a target position point and a file identifier from the user, read the service flow file corresponding to the file identifier from the specific storage medium, and substitute the initial position point and the target position point into the service flow file; and control the carrier movement by executing the service flow file.

Illustratively, the service flow file stored in the specified storage medium may include but not limited to at least one of: a service flow file for the aisle scene, where the aisle scene represents that a carrier passes through an aisle in a movement process; a service flow file for the dense storage scene, where the dense storage scene represents that a storage node has an inner storage location and an outer storage location, where the storage node is a storage node for placing a carrier; a service flow file for the elevator scene, where the elevator scene represents that a carrier passes through an elevator in a movement process; a service flow file for the stacking scene, where the stacking scene represents that a robot carries multiple carriers, or a storage node carries multiple carriers; a service flow file for the peripheral automation scene, where the peripheral automation scene represents that a robot needs to dock with a peripheral; a service flow file for the high-bay rack and double-deep scene, where the high-bay rack and double-deep scene represents that a robot is a double-deep robot and a carrier is a high-bay rack; a service flow file for the multi-vehicle type handover scene, where the multi-vehicle type handover scene represents robots of at least two vehicle types are needed to transport carriers; for the service flow file of the progressive exchange scene, the progressive exchange scene represents that there are a primary workstation and a backup workstation so that, after the carrier of the primary workstation is moved away, the carrier of the backup workstation is moved to the primary workstation; a service flow file for the buffer progressive scene, where the buffer progressive scene represents that, when a target position corresponds to multiple buffer points, a carrier progressively moves toward a closest buffer point of the target position.

Illustratively, if the service flow file is a service flow file for an aisle scene, or a service flow file for a dense storage scene, or a service flow file for an elevator scene, or a service flow file for a stacking scene, or a service flow file for a peripheral automation scene, or a service flow file for a high-bay rack and double-deep scene, or a service flow file for a progressive exchange scene, or a service flow file for a buffer progressive scene, the controlling module, when controlling the carrier movement by executing the service flow file, is specifically configured to: apply for a target carrier; where the target carrier is to be moved from the initial position point to the target position point; if the initial position point and the target position point are cross-map position points, determine a first handover point in the same map as the initial position point and a second handover point in the same map as the target position point; if the target carrier is moved in a cross-device mode, determine a first target type corresponding to the initial position point and a second target type corresponding to the target position point; move the target carrier by a robot of the first target type from the initial position point to the first handover point, and send a resource request message to a peripheral control device so that the peripheral control device moves the target carrier from the first handover point to the second handover point and returns a resource in-place message; after receiving the resource in-place message returned by the peripheral control device, move the target carrier by a robot of the second target type from the second handover point to the target position point.

Illustratively, after determining the first handover point in the same map as the initial position point and the second handover point in the same map as the target position point, the controlling module is further configured to, if the target carrier is moved in a following mode, determine the first target type corresponding to the initial position point; move the target carrier by the robot of the first target type, from the initial position point to the first handover point, and send a resource request message to the peripheral control device so that the peripheral control device moves the robot and the target carrier from the first handover point to the second handover point; after receiving a resource in-place message returned by the peripheral control device, move the target carrier by the robot of the first target type from the second handover point to the target position point.

Illustratively, if the first handover point and the second handover point are on different floors, the peripheral control device is used to control the target elevator to move from the floor where the first handover point is located to the floor where the second handover point is located. When moving the target carrier from the initial position point to the first handover point by the robot of the first target type, the controlling module is specifically configured to: if no free position is present in the target elevator, select a first free buffer point as a target buffer point from multiple buffer points outside the target elevator, and move the target carrier by the robot of the first target type from the initial position point to the target buffer point; where multiple buffer points are sorted in an ascending order of distance, and the distance is a distance between the buffer point and the target elevator; if a new free buffer point is present before the target buffer point, move the target carrier by the robot of the first target type to the new free buffer point; if a free position is present in the target elevator, move the target carrier by the robot of the first target type to the first handover point in the target elevator.

Before moving the target carrier from the second handover point to the target position point by the robot of the second target type, the controlling module is further configured to, in the process of moving the target carrier from the initial position point to the first handover point by the robot of the first target type, synchronously move the robot of the second target type to an associated position point corresponding to the second handover point; or, in the process of moving the target carrier from the first handover point to the second handover point by the peripheral control device, synchronously move the robot of the second target type to the associated position point corresponding to the second handover point; where the distance between the associated position point and the second handover point is less than a threshold.

If the first handover point and the second handover point are on different floors, before a resource request message is sent to the peripheral control device so that the peripheral control device moves the target carrier from the first handover point to the second handover point, the controlling module is further configured to, if a new task for the target carrier is received and the new task is used to move the target carrier to a candidate position point of the floor where the first handover point is located, cancel the movement task from the first handover point to the second handover point, and move the target carrier to the candidate position point by the robot of the first target type.

After applying for the target carrier to be moved from the initial position point to the target position point, the controlling module is further configured to, if the initial position point and the target position point are position points in a same map, determine a third target type corresponding to the initial position point and the target position point; by the robot of the third target type, move the target carrier from the initial position point to the target position point.

If the service flow file is a service flow file for the dense storage scene, before the target carrier is moved by the robot of the first target type from the initial position point to the first handover point, the controlling module is further configured to, if there is another carrier on the outer layer of the target carrier and there is a storage area for placing the another carrier, move the another carrier to the storage area; and after there is no another carrier on the outer layer of the target carrier, move the target carrier to the robot of the first target type; after moving the target carrier to the robot of the first target type, move the another carrier to a placement position of the target carrier, or move the another carrier to an original position of the another carrier, or maintain the another carrier in the storage area.

Illustratively, if the service flow file is a service flow file for a multi-vehicle type handover scene, the controlling module is specifically configured to, when controlling the carrier movement by executing the service flow file,
apply for a first carrier, a handover storage node and a storage node of the target position point and query for a first vehicle type;
if there is no cross-map task for the first carrier, perform the handling task by a robot of a first vehicle type to move the first carrier from the initial position point to the handover storage node; after completing the handling task, apply for a second carrier, where the second carrier is on the first carrier; query for a second vehicle type, and perform the handling task by a robot of the second vehicle type to move the second carrier from the handover storage node to the target position point;
if there is a cross-map task for the first carrier, determine a first handover point in the same map as the initial position point and a second handover point in the same map as the handover storage node; move the first carrier by the robot of the first vehicle type from the initial position point to the first handover point, and send a resource request message to the peripheral control device so that the peripheral control device can move the first carrier from the first handover point to the second handover point and return a resource in-place message; after receiving the resource in-place message returned by the peripheral control device, move the first carrier by the robot of the first vehicle type from the second handover point to the handover storage node; after completing the handling task, apply for a second carrier, where the second carrier is on the first carrier; query for a second vehicle type, and perform the handling task by the robot of the second vehicle type to move the second carrier from the handover storage node to the target position point.

When controlling the carrier movement by executing the service flow file, the controlling module is specifically configured to: start up the task flow of the service flow file, instantiate the task flow and drive the task flow execution; in the task flow execution process, when a resource application node is reached, send an application to the model building device for a desired resource; when the peripheral control node is reached, send a request to the peripheral control device for peripheral control; when the robot task node is reached, distribute a robot task to the robot control device, and wait for the completion of the robot task. When the task flow is at an event node waiting for message trigger, the task flow can be continued by resource change message, peripheral notification message, and robot execution stage message based on trigger mechanism of the service flow engine.

The controlling module is further configured to, in the task flow execution process, detect the node currently executed for the task flow, the resource obtained for the task flow, the peripheral controlled for the task flow, the task executed by the robot, and whether the message interaction process is exceptional; when detection is performed on the node currently executed for the task flow, detection is performed on the variables present on the node and whether the variables are correct, and the values of the variables are allowed to be modified; when detection is performed on the node currently executed for the task flow, if the node executed currently on the robot task node, the immediate execution of the robot task is triggered.

Illustratively, the obtaining module 61 is further configured to provide a toolkit of second development. The toolkit includes at least one of: handling object SDK, storage object SDK, elevator SDK, robot SDK, peripheral SDK and task SDK. If a second development instruction input by a user based on the toolkit is received, a task orchestration script is obtained based on the second development instruction, and the task orchestration script is used to orchestrate the service flow file; and/or, a development permission of the custom node can also be provided; if custom node information input by a user is received, the activity node and/or event node is generated based on the custom node information.

Illustratively, the service flow file is loaded into a service flow engine to control the carrier movement. The service flow engine includes osworkflow service flow engine, jbpm service flow engine, BPMN standard-based activiti service flow engine, BPMN standard-based flowable service flow engine, and BPMN standard-based camunda service flow engine.

Based on the same application concept as the method, the embodiments of the present disclosure provide an electronic device. As shown in FIG. 7, the electronic device may include a processor 71 and a machine-readable storage medium 72, storing machine-executable instructions executable by the processor 71, where the machine-executable instructions, when executed by the processor 71, cause the processor 71 to perform the orchestration method of the carrier movement service according to any one of the embodiments of the present disclosure.

Based on the same application concept as the method, the embodiments of the present disclosure provide a machine-readable storage medium, storing computer instructions, where the computer instructions, when executed by the processor, cause the processor to perform the orchestration method of the carrier movement service according to any one of the embodiments of the present disclosure.

In an example, the machine-readable storage medium may be any electronic, magnetic, optical, or other physical storage apparatus, and may contain or store information, such as executable instructions, data, and so on. For example, the machine-readable storage medium may be: RAM (Radom Access Memory), volatile memory, non-volatile memory, flash memory, storage drive (such as hard drive), solid state hard disk, any type of storage disk (Such as optical discs, DVDs, etc.), or similar storage media, or a combination of them.

The systems, devices, modules or units illustrated in the above embodiments can be implemented specifically by a computer chip by a product with a certain functionality. A typical implementation device is a computer, and the specific form of the computer can be a personal computer, a laptop computer, a cellular phone, a camera phone, a smart phone, a personal digital assistant, a media player, a navigation device, an e-mail sending and receiving device, a game console, a tablet computer, a wearable device or a combination of any of these devices.

For convenience of description, when describing the above apparatus, the functions are divided into various units and described separately. Of course, when implementing the present disclosure, the functions of the units may be implemented in the same software or multiple software and/or hardware.

Those skilled in the art should understand that the embodiments of the present application can be provided as methods, systems, or computer program products. Therefore, the present disclosure may take the form of an entirely hardware implementation, an entirely software implementation, or an implementation combining both software and hardware aspects. Moreover, the present disclosure may take the form of a computer program product implemented on one or more computer-usable storage media (including, but not limited to, disk memory, CD-ROM, optical memory, etc.) containing computer-usable program code.

The embodiments of this application is described with reference to flowcharts and/or block diagrams of the method, the device (the system), and the computer program product in the embodiments of this application. It should be understood that each process and / or block in the flowcharts and / or block diagrams, and combinations of processes and / or blocks in the flowcharts and / or block diagrams can be implemented by computer program instructions. These computer program instructions may be provided to a processor of a general-purpose computer, a special-purpose computer, an embedded processor, or other programmable data processing devices to produce a machine, so that through instructions executed by the processor of the computers or other programmable data processing devices, an apparatus for implementing the functions specified in one or more processes of the flowcharts and / or one or more blocks of the block diagrams is produced.

These computer program instructions may also be stored in a computer-readable memory capable of directing a computer or other programmable data processing device to work in a specific manner such that the instructions stored in the computer-readable memory produce a manufactured article including an instruction device, where the instruction device implements the functions specified in one or more processes of the flowcharts and / or one or more blocks of the block diagrams.

The above are only implementations of the present disclosure and are not intended to limit the present disclosure. For those skilled in the art, this disclosure may have various modifications and changes. Any modification, equivalent replacement, and improvement made within the spirit and principle of this disclosure shall be included in the scope of claims of this disclosure.

## Claims

1. An orchestration method of a carrier movement service, comprising:
providing an activity node and an event node are provided; wherein the activity node comprises an orchestration object and its configuration parameters, the configuration parameters of the orchestration object comprise input parameters and output parameters and functions of the orchestration object, and the orchestration object refers to resources used for a carrier movement process; the event node comprises a message object and its configuration parameters, the configuration parameters of the message object comprise functions of the message object, and the message object is a message for triggering a flow to be continued in the carrier movement process; and
based on carrier movement service orchestration information input by a user, orchestrating a service flow file in combination with the activity node and the event node; wherein the service flow file is used for controlling carrier movement.

2. The method of claim 1, wherein the orchestration object in the activity node comprises at least one of:
a carrier object, representing a carrier to be moved in the carrier movement service;
a storage node object, representing a position for placing a carrier in the carrier movement service;
a vehicle type object, representing a robot type for placing a carrier in the carrier movement service;
a route object, representing a movement route of a robot in the carrier movement service;
a robot object, representing a robot in the carrier movement service; or
a peripheral resource object, representing a peripheral resource in the carrier movement service.

3. The method of claim 2, wherein the orchestration object in the activity node comprises the carrier object, and the configuration parameters of the carrier object comprise at least one of:
querying for a carrier based on input condition;
supporting querying for a carrier from bin, site and aisle;
supporting querying for a temporary carrier;
supporting querying for an unbound carrier;
after finding a carrier, adding an outbound lock identifier to the carrier;
when cyclically querying for a carrier, triggering by timer or region state update;
in response to a target position point being already input, querying for a carrier based on the carrier type of the target position point;
in response to a target position point being already input, querying for a carrier based on a distance between the target position point and the carrier;
in response to carrier multitasking being supported, ignoring carrier lock state;
in response to empty carrier query being not selected, allowing querying for empty carrier and loaded carrier;
in response to an unidentified carrier being supported, allowing querying for a temporary carrier; or
whether carrier stacking is supported.

4. The method of claim 2, wherein the orchestration object in the activity node comprises the storage node object, and the configuration parameters of the storage node object comprise at least one of:
querying for a storage object based on input condition;
supporting querying for a storage object from bin, site and aisle;
in response to a storage object being in an inner storage location, returning to a storage object of an outer storage location;
after finding a storage object, adding an inbound lock identifier to the storage object;
when cyclically querying for a storage object, triggering by timer or region state update; or
whether there is a queue in a storage object; if yes, ignoring a storage object lock state.

5. The method of claim 2, wherein the orchestration object in the activity node comprises the vehicle type object, and the configuration parameters of the vehicle type object comprise at least one of:
querying for an intersection of various vehicle types;
in response to the vehicle types being not configured, defaulting all vehicle types to be available;
in response to the vehicle types being configured, taking an intersection of the configured vehicle types; in response to the intersection being empty, reporting exception; or
in response to the vehicle types being inconsistent with vehicle numbers, reporting exception.

6. The method of claim 2, wherein the orchestration object in the activity node comprises the route object, and the configuration parameters of the route object comprise at least one of:
cross-map use, comprising combination of handover points of elevator and map;
obtaining all routes leading to the target position point;
updating a number of entry and exit tasks for an elevator in a route;
filtering a disabled elevator or an elevator in abnormal state;
before querying for a route again for elevator anomaly, firstly releasing a route;
in response to one route spanning multiple maps, performing cross-map node execution multiple times; or
when a cross-elevator task is completed, updating a number of entry and exit tasks for an elevator.

7. The method of claim 2, wherein the orchestration object in the activity node comprises the robot object, and the configuration parameters of the robot object comprise at least one of:
executing an empty vehicle movement task;
executing a loaded vehicle movement task;
executing a handling task;
executing a prescheduling task;
executing an execution mechanism action task; or
executing a map switching task.

8. The method of claim 2, wherein the orchestration object in the activity node comprises the peripheral resource object, and the configuration parameters of the peripheral resource object comprise at least one of:
based on input condition, querying for a peripheral resource and sending the peripheral resource to a peripheral control device;
waiting for a feedback message from the peripheral control device;
when the peripheral resource is disabled, directly returning without invoking an interface of the peripheral control device; or
when the peripheral resource is disabled, cyclically applying for the peripheral resource.

9. The method of claim 1, wherein the message object in the event node comprises at least one of:
a resource change message object, representing change of resources of the orchestration object;
a task continuation message object, representing task continuation;
a peripheral notification message object, comprising a resource request message and a resource in-place message, wherein the resource request message represents a peripheral resource is requested, and the resource in-place message represents a peripheral resource is ready; or
a robot execution message object, representing a message in an execution process.

10. The method of any one of claims 1 to 9, wherein the service flow file comprises multiple task nodes executed in sequence, and based on carrier movement service orchestration information input by a user, the service flow file is orchestrated in combination with the activity node and the event node, which comprises:
for each task node, in response to the task node is directed to the orchestration object, based on an orchestration object selection instruction input by the user, selecting a target orchestration object corresponding to the orchestration object selection instruction, and displaying configuration parameters of the target orchestration object; creating the task node in the service flow file, where the task node comprises the target orchestration object and an input condition input by the user based on the configuration parameters; and
in response to the task node being directed to the message object, based on a message object selection instruction input by the user, selecting a target message object corresponding to the message object selection instruction; creating a task node in the service flow file, where this task node comprises the target message object.

11. The method of any one of claims 1 to 9, further comprising:
after orchestrating the service flow file based on the carrier movement service orchestration information input by the user and in combination with the activity node and the event node, storing the service flow file in a specified storage medium;
after receiving a user-input task execution instruction comprising an initial position point, a target position point and a file identifier, reading a service flow file corresponding to the file identifier from the specified storage medium, and substituting the initial position point and the target position point into the service flow file; and
controlling carrier movement by executing the service flow file.

12. The method of claim 11, wherein the service flow file stored in the specified storage medium comprises at least one of:
a service flow file for an aisle scene, wherein the aisle scene represents that a carrier passes through an aisle in a movement process;
a service flow file for the dense storage scene, wherein the dense storage scene represents that a storage node has an inner storage location and an outer storage location, and the storage node is a position for placing a carrier;
a service flow file for the elevator scene, wherein the elevator scene represents that a carrier passes through an elevator in a movement process;
a service flow file for the stacking scene, wherein the stacking scene represents that a robot carries multiple carriers, or a storage node carries multiple carriers;
a service flow file for the peripheral automation scene, wherein the peripheral automation scene represents that a robot needs to dock with a peripheral;
a service flow file for the high-bay rack and double-deep scene, wherein the high-bay rack and double-deep scene represents that a robot is a double-deep robot and a carrier is a high-bay rack;
a service flow file for the multi-vehicle type handover scene, wherein the multi-vehicle type handover scene represents robots of at least two vehicle types are needed to transport carriers;
a service flow file for the progressive exchange scene, wherein the progressive exchange scene represents that there are a primary workstation and a backup workstation so that, after the carrier of the primary workstation is moved away, the carrier of the backup workstation is moved to the primary workstation; or
a service flow file for the buffer progressive scene, wherein the buffer progressive scene represents that, when a target position corresponds to multiple buffer points, a carrier progressively moves toward a closest buffer point of the target position.

13. The method of claim 12, wherein in response to the service flow file being a service flow file for the aisle scene, or a service flow file for the dense storage scene, or a service flow file for the elevator scene, or a service flow file for the stacking scene, or a service flow file for the peripheral automation scene, or a service flow file for the high-bay rack and double-deep scene, or a service flow file for the progressive exchange scene, or a service flow file for the buffer progressive scene, controlling carrier movement by executing the service flow file comprises:
applying for a target carrier; wherein the target carrier is to be moved from the initial position point to the target position point;
in response to the initial position point and the target position point being cross-map position points, determining a first handover point in the same map as the initial position point and a second handover point in the same map as the target position point;
in response to the target carrier being moved in a cross-device mode, determining a first target type corresponding to the initial position point and a second target type corresponding to the target position point;
moving the target carrier by a robot of the first target type from the initial position point to the first handover point, and sending a resource request message to a peripheral control device so that the peripheral control device moves the target carrier from the first handover point to the second handover point and returns a resource in-place message; and
after receiving the resource in-place message returned by the peripheral control device, moving the target carrier by a robot of the second target type from the second handover point to the target position point.

14. The method of claim 13, wherein after the first handover point in the same map as the initial position point and the second handover point in the same map as the target position point are determined, the method further comprises:
in response to the target carrier being moved in a following mode, determining the first target type corresponding to the initial position point;
moving the target carrier by the robot of the first target type from the initial position point to the first handover point, and sending a resource request message to the peripheral control device so that the peripheral control device moves the robot and the target carrier from the first handover point to the second handover point; and
after the resource in-place message returned by the peripheral control device is received, moving the target carrier by the robot of the second target type from the second handover point to the target position point.

15. The method of claim 13 or 14, wherein in response to the first handover point and the second handover point being on different floors, the peripheral control device is configured to control the target elevator to move from the floor where the first handover point is located to the floor where the second handover point is located; moving the target carrier by the robot of the first target type from the initial position point to the first handover point comprises:
in response to no free position being present in the target elevator, selecting a first free buffer point as a target buffer point from multiple buffer points outside the target elevator, and moving the target carrier by the robot of the first target type from the initial position point to the target buffer point; wherein multiple buffer points are sorted in an ascending order of distance, and the distance is a distance between the buffer point and the target elevator;
in response to a new free buffer point being present before the target buffer point, moving the target carrier by the robot of the first target type to the new free buffer point; and
in response to a free position being present in the target elevator, moving the target carrier by the robot of the first target type to the first handover point in the target elevator.

16. The method of claim 13, wherein before the target carrier is moved by the robot of the second target type from the second handover point to the target position point, the method further comprises:
while the target carrier is moved by the robot of the first target type from the initial position point to the first handover point, synchronously moving the robot of the second target type to an associated position point corresponding to the second handover point; or,
while the peripheral control device moves the target carrier from the first handover point to the second handover point, synchronously moving the robot of the second target type to the associated position point corresponding to the second handover point;
wherein the distance between the associated position point and the second handover point is less than a threshold.

17. The method of claim 13 or 14, wherein in response to the first handover point and the second handover point being on different floors, before a resource request message to the peripheral control device is sent so that the peripheral control device moves the target carrier from the first handover point to the second handover point, the method further comprises:
in response to a new task for the target carrier being received and the new task being used to move the target carrier to a candidate position point of the floor where the first handover point is located, canceling the movement task from the first handover point to the second handover point, and moving the target carrier to the candidate position point by the robot of the first target type.

18. The method of claim 13, wherein, after applying for the target carrier to be moved from the initial position point to the target position point, the method further comprises:
in response to the initial position point and the target position point being position points in a same map, determining a third target type corresponding to the initial position point and the target position point; and
by the robot of the third target type, moving the target carrier from the initial position point to the target position point.

19. The method of claim 13 or 14, wherein in response to the service flow file being a service flow file for the dense storage scene, before the target carrier is moved by the robot of the first target type from the initial position point to the first handover point, the method further comprises:
in response to there being another carrier on the outer layer of the target carrier and there being a storage area for placing the another carrier, moving the another carrier to the storage area; and after there is no another carrier on the outer layer of the target carrier, moving the target carrier to the robot of the first target type; and
after moving the target carrier to the robot of the first target type, moving the another carrier to a placement position of the target carrier, or moving the another carrier to an original position of the another carrier, or maintaining the another carrier in the storage area.

20. The method of claim 12, wherein in response to the service flow file being a service flow file for a multi-vehicle type handover scene, controlling the carrier movement by executing the service flow file comprises:
applying for a first carrier, a handover storage node and a storage node of the target position point and querying for a first vehicle type;
in response to there being no cross-map task for the first carrier, performing the handling task by a robot of the first vehicle type to move the first carrier from the initial position point to the handover storage node;
after completing the handling task, applying for a second carrier, wherein the second carrier is on the first carrier; and
querying for a second vehicle type, and performing the handling task by a robot of the second vehicle type to move the second carrier from the handover storage node to the target position point.

21. The method of claim 20, wherein after applying for the first carrier, the handover storage node and the storage node of the target position point and querying for the first vehicle type, the method further comprises:
in response to there being a cross-map task for the first carrier, determining a first handover point in the same map as the initial position point and a second handover point in the same map as the handover storage node;
moving the first carrier is moved by the robot of the first vehicle type from the initial position point to the first handover point, and sending a resource request message to the peripheral control device so that the peripheral control device moves the first carrier from the first handover point to the second handover point and returns a resource in-place message;
after the resource in-place message returned by the peripheral control device is received, moving the first carrier by the robot of the first vehicle type from the second handover point to the handover storage node;
after the handling task is completed, applying for the second carrier, wherein the second carrier is on the first carrier; and
querying for the second vehicle type, and performing the handling task by the robot of the second vehicle type to move the second carrier from the handover storage node to the target position point.

22. The method of claim 11, wherein controlling carrier movement by executing the service flow file comprises:
starting up a task flow of the service flow file, instantiating the task flow and driving the execution of the task flow; wherein, in the task flow execution process, when a resource application node is reached, applying to a model building device for a desired resource;
when a peripheral control node is reached, requesting the peripheral control device for peripheral control; and
when a robot task node is reached, distributing a robot task to a robot control device, and waiting for the completion of the robot task; wherein, when the task flow is at an event node waiting for message trigger, triggering the task flow to be continued by resource change message, peripheral notification message, and robot execution stage message based on trigger mechanism of a service flow engine until the flow is ended.

23. The method of claim 22, further comprising:
in the task flow execution process, detecting the node currently executed for the task flow, the resource obtained for the task flow, the peripheral controlled for the task flow, the task executed by the robot, and whether the message interaction process is exceptional; wherein, when detection is performed on the node currently executed for the task flow, detection is performed on the variables present on the node and whether the variables are correct, and the values of the variables are allowed to be modified; when detection is performed on the node currently executed for the task flow, in response to the node executed currently being on the robot task node, triggering the immediate execution of the robot task.

24. The method of any one of claims 1 to 9, further comprising:
providing a toolkit of second development, wherein the toolkit comprises at least one of: handling object SDK, storage object SDK, elevator SDK, robot SDK, peripheral SDK and task SDK; in response to a second development instruction input by a user based on the toolkit being received, obtaining a task orchestration script based on the second development instruction, wherein the task orchestration script is used to orchestrate the service flow file; and/or,
providing a development permission of a custom node, wherein, in response to custom node information input by a user being received, the activity node and/or event node is generated based on the custom node information.

25. The method of any one of claims 1 to 9, wherein, the service flow file is loaded into a service flow engine to control the carrier movement,
wherein, the service flow engine comprises osworkflow service flow engine, jbpm service flow engine, BPMN standard-based activiti service flow engine, BPMN standard-based flowable service flow engine, and BPMN standard-based camunda service flow engine.

26. An orchestration system for a carrier movement service, comprising:
an obtaining module, configured to provide an activity node and an event node; wherein the activity node comprises an orchestration object and its configuration parameters, the configuration parameters of the orchestration object comprise input parameters and output parameters and functions of the orchestration object, and the orchestration object refers to resources used for a carrier movement process; the event node comprises a message object and its configuration parameters, the configuration parameters of the message object comprise functions of the message object, and the message object is a message for triggering a flow to be continued in the carrier movement process; and
a processing module, configured to, based on carrier movement service orchestration information input by a user, orchestrate a service flow file in combination with the activity node and the event node; wherein the service flow file is used for controlling carrier movement.

27. The system of claim 16, wherein the service flow file comprises multiple task nodes executed in sequence, and when, based on the carrier movement service orchestration information input by the user, the service flow file is orchestrated in combination with the activity node and the event node, the processing module is specifically configured to:
for each task node,
in response to the task node being directed to the orchestration object, based on an orchestration object selection instruction input by the user, select a target orchestration object corresponding to the orchestration object selection instruction, and display configuration parameters of the target orchestration object; create the task node in the service flow file, wherein the task node comprises the target orchestration object and an input condition input by the user based on the configuration parameters;
in response to the task node being directed to the message object, based on a message object selection instruction input by the user, select a target message object corresponding to the message object selection instruction; create the task node in the service flow file, wherein the task node comprises the target message object.

28. The system of claim 16, wherein the processing module is further configured to: after orchestrating the service flow file based on the carrier movement service orchestration information input by the user and in combination with the activity node and the event node, store the service flow file in a specified storage medium;
the system further comprises: a controlling module, configured to, after receiving a user-input task execution instruction comprising an initial position point, a target position point and a file identifier, read a service flow file corresponding to the file identifier from the specified storage medium, and substitute the initial position point and the target position point into the service flow file; control the carrier movement by executing the service flow file.

29. The system of claim 2, wherein in response to the service flow file being a service flow file for an aisle scene, or a service flow file for a dense storage scene, or a service flow file for an elevator scene, or a service flow file for a stacking scene, or a service flow file for a peripheral automation scene, or a service flow file for a high-bay rack and double-deep scene, or a service flow file for a progressive exchange scene, or a service flow file for a buffer progressive scene,
the controlling module, when controlling the carrier movement by executing the service flow file, is specifically configured to:
apply for a target carrier; wherein the target carrier is to be moved from the initial position point to the target position point;
in response to the initial position point and the target position point being cross-map position points, determine a first handover point in the same map as the initial position point and a second handover point in the same map as the target position point;
in response to the target carrier being moved in a cross-device mode, determine a first target type corresponding to the initial position point and a second target type corresponding to the target position point;
move the target carrier by a robot of the first target type from the initial position point to the first handover point, and send a resource request message to a peripheral control device so that the peripheral control device moves the target carrier from the first handover point to the second handover point and returns a resource in-place message; and
after receiving the resource in-place message returned by the peripheral control device, move the target carrier by a robot of the second target type from the second handover point to the target position point.

30. The system of claim 29, wherein,
after determining the first handover point in the same map as the initial position point and the second handover point in the same map as the target position point, the controlling module is further configured to, in response to the target carrier being moved in a following mode, determine the first target type corresponding to the initial position point; move the target carrier by the robot of the first target type from the initial position point to the first handover point, and send a resource request message to the peripheral control device so that the peripheral control device moves the robot and the target carrier from the first handover point to the second handover point; and
after receiving a resource in-place message returned by the peripheral control device, move the target carrier by the robot of the first target type from the second handover point to the target position point.

31. The system of claim 28, wherein,
in response to the service flow file being a service flow file for the multi-vehicle type handover scene;
the controlling module, when controlling the carrier movement by executing the service flow file, is specifically configured to:
apply for a first carrier, a handover storage node and a storage node of the target position point and query for the first vehicle type;
in response to there being no cross-map task for the first carrier, perform the handling task by a robot of a first vehicle type to move the first carrier from the initial position point to the handover storage node; after the handling task is completed, apply for a second carrier, where the second carrier is on the first carrier; query for a second vehicle type, and perform the handling task by a robot of the second vehicle type to move the second carrier from the handover storage node to the target position point; and
in response to there being a cross-map task for the first carrier, determine a first handover point in the same map as the initial position point and a second handover point in the same map as the handover storage node; move the first carrier by the robot of the first vehicle type from the initial position point to the first handover point, and send a resource request message to the peripheral control device so that the peripheral control device moves the first carrier from the first handover point to the second handover point and returns a resource in-place message; after the resource in-place message returned by the peripheral control device is received, move the first carrier by the robot of the first vehicle type from the second handover point to the handover storage node; after the handling task is completed, apply for the second carrier , wherein the second carrier is on the first carrier; query for the second vehicle type, and perform the handling task by the robot of the second vehicle type to move the second carrier from the handover storage node to the target position point.

32. An electronic device, comprising a processor and a machine readable storage medium, wherein the machine readable storage medium stores machine executable instructions executable by the processor; and the processor is configured to execute the machine executable instructions to perform the method of any one of claims 1 to 25.
